(19) **Europäisches Patentamt / European Patent Office / Office européen des brevets**

(11) **EP 3 104 520 B1**

(12) **EUROPEAN PATENT SPECIFICATION**

(45) Date of publication and mention
of the grant of the patent:
**17.02.2021 Bulletin 2021/07**

(51) Int Cl.:
**H02P 21/20** *(2016.01)* **H02P 21/14** *(2016.01)*
**H02P 21/00** *(2016.01)*

(21) Application number: **15171625.5**

(22) Date of filing: **11.06.2015**

(54) **METHOD AND CONTROLLER FOR CONTROLLING A SYNCHRONOUS MACHINE**

VERFAHREN UND STEUERUNG ZUR STEUERUNG EINER SYNCHRONMASCHINE

PROCÉDÉ ET DISPOSITIF DE COMMANDE D'UNE MACHINE SYNCHRONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.12.2016 Bulletin 2016/50**

(73) Proprietor: **ABB Schweiz AG**
**5400 Baden (CH)**

(72) Inventors:
• **PERETTI, Luca**
**722 17 Västerås (SE)**

• **ZANUSO, Giovanni**
**722 19 Västerås (SE)**

(74) Representative: **Kransell & Wennborg KB**
**P.O. Box 27834**
**115 93 Stockholm (SE)**

(56) References cited:
**GB-A- 2 390 766**     **US-A1- 2005 035 676**
**US-A1- 2013 020 971**

**Description**

**TECHNICAL FIELD**

The present disclosure generally relates to control of synchronous machines. In particular it relates to a method, to a controller, a computer program, to a computer program product for controlling a synchronous machine by means of an electrical drive, and to a synchronous machine control system.

**BACKGROUND**

The control of synchronous machines is a well-developed topic in the scenario of electrical drives. In the last decades, the increasing introduction of synchronous machines as an alternative to induction motors has been aided by a review of the conventional machine control structures, in order to develop efficient, dynamically stable and robust solutions.

Dating back from the first attempts of exploiting the reluctance torque in interior permanent magnets machines or reluctance machines, it is today widely accepted that the inclusion of machine model information in the electrical drives leads to better performances. The model information comes in the form of machine magnetic characteristics, especially on the relation between the currents and the flux linkages including magnetic saturation and cross-magnetisation effects. This information is of foremost importance for the tuning of the regulators, for the selection of the correct current references when a specific torque is required, and for stability/robustness at large.

In addition, efforts have been made towards the development of flux-weakening control structures when a wide speed ratio can be achieved. By processing the available voltage and the produced voltage, regulator-based approaches have been proposed. The most conventional ones are based on PI regulation, while some attempts to seamlessly integrate maximum-torque-per-ampere and maximum-torque-per-voltage operation are available.

Although many steps have been taken towards robust solutions, there is still space for improvement in the field.

More recent efforts have tried to propose control structures which are able to take into account a certain amount of parameter variation. Such variations could be the result of an improper identification of the machine magnetic model, or of the model variation due to temperature changes, or of manufacturing differences over mass production of the same machine design. Although some approaches have been tested, the final answer to this problem has not been reached yet.

There is a certain potential for introducing more machine model information inside control strategies. This information could either come from the design of the machine under control, or from an adequate identification run. The more information on the magnetic model of the machine, the better the control strategy can potentially decide on how to regulate speed and torque in a real-time fashion.

During system identification only relatively few operational parameter values are stored. These operational values are furthermore determined when the synchronous machine has not yet reached its operational temperature. The operational parameter values collected in this manner may therefore deviate from the actual operational parameter values. Additional operational parameter values are typically interpolated based on the operational parameter values obtained during system identification. Looking forward, there are indications that synchronous machines and electrical drives to a larger extent than today will be sold as packages. Thereby, more accurate and more operational parameters values of e.g. the flux linkage and stator resistance of the synchronous machine than what can be accomplished by means of system identification at commissioning may be obtained and stored in the electrical drive. The operational parameter values may already in the factory be installed in the electrical drive, and they may for example be obtained by means of simulations and tests. Thus, for package solutions a much larger amount of operational parameter values for a plurality of conditions may be stored in the electrical drive compared to operational parameter value collection during system identification at commissioning.

United States Paten Application Publication US 2005/035676 A1 discloses a motor control method obtaining a current reference vector for a torque reference and determining an adjustment part voltage vector for the control of the motor.

**SUMMARY**

It has been realised by the present inventors, that by means of having available more operational parameter values and perhaps more accurate operational parameter values of a synchronous machine, the dynamics as well as the efficiency of the control may be improved.

In view of the above, an object of the present disclosure is to solve, or at least mitigate, the problems of the prior art.

Hence according to a first aspect of the present disclosure there is provided a method of controlling a synchronous machine by means of an electrical drive, wherein the method comprises: a) obtaining a current reference vector for a torque reference, from at least one current look-up table, which at least one current look-up table describes relations between currents and torques under a plurality of conditions for the synchronous machine, and obtaining a flux linkage vector for the current reference vector, from a flux linkage look-up table describing relations between currents and flux linkages, b) determining an adjustment part voltage vector by means of a regulator, based on a difference between the current reference vector and a measured current, c) determining a flux linkage adjustment vector and a torque reference error based on the adjustment part voltage vector and on the measured current, d) generating a compensated torque reference by summing the torque reference and the torque reference error, e) obtaining a new current reference vector for the compensated torque reference, from the at least one current look-up table, and obtaining a new flux linkage vector for the new current reference vector from the flux linkage look-up table, f) determining a voltage reference vector based on the new current reference vector, and on the sum of the new flux linkage vector and the flux linkage adjustment vector by means of a model describing the dynamics of the synchronous machine, and g) controlling the synchronous machine by means of the electrical drive based on the adjusted voltage reference vector.

By means of the feedforward operation of the current regulation loop to obtain the voltage reference vector, the dynamic operation of the control operation may be increased. Moreover, due to the feedback action of the flux linkage adjustment vector and the torque reference error, real-time compensation of model inaccuracies may be provided.

One embodiment comprises f) determining a new adjusted voltage reference vector by summing the adjusted voltage reference vector and a new adjustment part voltage vector that is obtained from the regulator based on a difference between the new current reference vector and a measured current, wherein in step g) the controlling is based on the new adjusted voltage reference vector.

According to one embodiment the current reference vector and the new current reference vector are vectors in a dq-coordinate system that rotates with a rotor speed of the synchronous machine.

According to one embodiment a d-axis current component of the current reference vector and a d-axis current component of the new current reference vector are obtained from a d-axis component look-up table and a q-axis current component of the current reference vector and a q-axis current component of the new current reference vector are obtained from a q-axis component look-up table, the d-axis component look-up table comprising a plurality of d-axis current component reference values for each torque value, and the q-axis component look-up table comprising a plurality of q-axis current component reference values for each torque value and each d-axis component value, wherein in step a) and in step e) a current reference vector with minimal length is selected as the current reference vector and the new current reference vector, respectively.

By selecting reference current vectors that have minimal length, the current for a particular torque reference may be minimised, thereby increasing the efficiency of the control operation and minimising losses.

According to one embodiment in step c) the flux linkage adjustment vector and the torque reference error are determined based on an integral part of the first adjustment part voltage vector.

According to one embodiment the flux linkage adjustment vector and the torque reference error are determined further based on a measured speed of the synchronous machine.

According to one embodiment in step e) the new current reference vector is obtained by first obtaining from the d-axis component look-up table a d-axis current component under maximum torque per ampere, MTPA, conditions, for the compensated torque reference and subsequently obtaining from the q-axis component look-up table a q-axis current component for the compensated torque reference and the d-axis current component.

According to one embodiment step f) further comprises comparing the magnitude of the adjusted voltage reference vector with a limit voltage of the synchronous machine when a measured speed of the synchronous machine is higher than a limit speed of the synchronous machine, wherein in case the magnitude of the adjusted voltage reference vector is smaller than the limit voltage, f1) setting the d-axis current component and the q-axis current component as the new current reference vector.

According to one embodiment in case the magnitude of the adjusted voltage reference vector is greater than the limit voltage and the measured speed is greater than the limit speed, the method comprises f2) reducing the d-axis current component towards a minimum d-axis current component, f3) obtaining from the q-axis component look-up table a new q-axis current component for the new d-axis current component and the compensated torque reference, f4) obtaining a new adjusted voltage reference vector based on the new current component for the d-axis, the new q-axis current component and on the sum of the new flux linkage vector and the flux linkage adjustment vector by means of the model, f5) comparing the magnitude of the new adjusted voltage reference vector with the limit voltage, repeating steps f2) to f5) until the magnitude of the new adjusted voltage reference vector is equal to or smaller than the limit voltage, and when the magnitude of the new adjusted voltage reference vector is equal to or smaller than the limit voltage, setting the new d-axis current component and the new q-axis current component as the new current reference vector and the new adjusted voltage reference vector as the adjusted voltage reference vector.

Flux-weakening capabilities are thereby obtained without the need of an external voltage loop regulation.

As an alternative to steps f2-f5, according to one embodiment, in case the magnitude of the adjusted voltage reference vector is greater than the limit voltage and the measured speed is greater than the limit speed, the method comprises: f"2) obtaining a new d-axis current component by reducing the d-axis current component towards a minimum d-axis current component, f"3) obtaining from the q-axis component look-up table a new q-axis current component for the new d-axis current component and the compensated torque reference, f"4) obtaining an updated adjusted voltage reference vector based on the new current component for the d-axis and the new q-axis current component, by means of the model, f"5) determining an updated new adjusted voltage reference vector by summing the updated adjusted voltage reference vector and a new adjustment part voltage vector that is obtained from the regulator based on a difference between a vector formed by the new d-axis current component and the new q-axis current and component, and a measured current, f"6) comparing the magnitude of the updated new adjusted voltage reference vector with the limit voltage, repeating steps f"2) to f"6) until the magnitude of the updated new adjusted voltage reference vector is equal to or smaller than the limit voltage, and when the magnitude of the updated new adjusted voltage reference vector is equal to or smaller than the limit voltage, setting the new d-axis current component and the new q-axis current component as the new current reference vector and the updated new adjusted voltage reference vector as the adjusted voltage reference vector.

According to a second aspect of the present disclosure there is provided a computer program for controlling a synchronous machine by means of an electrical drive, wherein the computer program comprises computer code which, when run on a processing unit of a controller, causes the controller to: a) obtain a current reference vector for a torque reference, from at least one current look-up table, which at least one current look-up table describes the relations between currents and torques under a plurality of conditions for the synchronous machine, and obtaining a flux linkage vector for the current reference vector, from a flux linkage look-up table describing the relations between currents and flux linkages, b) determine an adjustment part voltage vector by means of a regulator, based on a difference between the current reference vector and a measured current, c) determine a flux linkage adjustment vector and a torque reference error based on the adjustment part voltage vector and on the measured current, d) generate a compensated torque reference by summing the torque reference and the torque reference error, e) obtain a new current reference vector for the compensated torque reference, from the at least one current look-up table, and obtaining a new flux linkage vector for the new current reference vector from the flux linkage look-up table, f) determine an adjusted voltage reference vector based on the new current reference vector, and on the sum of the new flux linkage vector and the flux linkage adjustment vector by means of a model describing the dynamics of the synchronous machine, and g) control the synchronous machine by means of the electrical drive based on the adjusted voltage reference vector.

According to a third aspect of the present disclosure there is provided a computer program product comprising a computer program as claimed in claim 10, and a storage unit on which the computer program is stored.

According to a fourth aspect of the present disclosure there is provided a controller configured to control a synchronous machine by means of an electrical drive, wherein the controller comprises: a processing unit, and a storage unit containing computer code, wherein the computer code when run on the processing unit causes the controller to: a) obtain a current reference vector for a torque reference, from at least one current look-up table, which at least one current look-up table describes relations between currents and torques under a plurality of conditions for the synchronous machine, and obtaining a flux linkage vector for the current reference vector, from a flux linkage look-up table describing relations between currents and flux linkages, b) determine an adjustment part voltage vector by means of a regulator, based on a difference between the current reference vector and a measured current, c) determine a flux linkage adjustment vector and a torque reference error based on the adjustment part voltage vector and on the measured current, d) generate a compensated torque reference by summing the torque reference and the torque reference error, e) obtain a new current reference vector for the compensated torque reference, from the at least one current look-up table, and obtaining a new flux linkage vector for the new current reference vector from the flux linkage look-up table, f) determine an adjusted voltage reference vector based on the new current reference vector, and on the sum of the new flux linkage vector and the flux linkage adjustment vector by means of a model describing the dynamics of the synchronous machine, and g) control the synchronous machine by means of the electrical drive based on the adjusted voltage reference vector.

According to one embodiment the current reference vector and the new current reference vector are vectors in a dq-coordinate system that rotates with a rotor speed of the synchronous machine.

According to one embodiment a d-axis current component of the current reference vector and a d-axis current component of the new current reference vector are obtained from a d-axis component look-up table and a q-axis current component of the current reference vector and a q-axis current component of the new current reference vector are obtained from a q-axis component look-up table, the d-axis component look-up table comprising a plurality of d-axis current component reference values for each torque value, and the q-axis component look-up table comprising a plurality of q-axis current component reference values for each torque value and each d-axis component value, wherein the processing unit is configured to select a current reference vector with minimal length as the current reference vector and the new current reference vector.

According to a fifth aspect of the present disclosure there is provided a synchronous machine control system comprising: a synchronous machine, an electrical drive arranged to control the synchronous machine, and a controller according to the fourth aspect, configured to control the electrical drive.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

## BRIEF DESCRIPTION OF THE DRAWINGS

The specific embodiments of the inventive concept will now be described, by way of example, with reference to the accompanying drawings, in which:

Fig. 1 is a schematic illustration of a controller configured to control a synchronous machine by means of an electrical drive;

Fig. 2 shows a block diagram of a synchronous machine control system 1;

Fig. 3 shows an overall view of functional blocks of the controller in Fig. 1;

Fig. 4 shows a feedforward functionality of the controller in Fig. 1;

Fig. 5 shows a model mismatch compensation functionality of the controller in Fig. 1;

Fig. 6 shows a flux linkage and torque error calculation block;

Fig. 7a shows a flowcharts of a first example of flux-weakening control of a synchronous machine;

Fig. 7b shows a flowcharts of a second example of flux-weakening control of a synchronous machine;

Figs 8a-b show block diagrams of the first and second example of flux-weakening control,

Fig. 8c is a block diagram that shows flux-weakening control of a synchronous machine; and

Fig. 9 is a flowchart of a method of controlling a synchronous machine by means of an electrical drive.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

The invention is defined by the independent claims 1, 11 and 13.

Like numbers refer to like elements throughout the description.

The present disclosure relates to a control method for controlling a synchronous machine by means of an electrical drive. The synchronous machine may be a motor or generator, and the electrical drive may for example be an inverter or a frequency converter. The synchronous machine and electrical drive may be integrated or they be physically separate devices. The method is based on that synchronous machine model information in the form of operational parameter values, in particular flux linkage and stator resistance, is available for the control strategies. The synchronous machine model information may have been made available from the design of the synchronous machine under control, or from an adequate identification run. The more information on the synchronous machine model, i.e. the magnetic model, the better the control strategy can potentially decide on how to regulate speed and torque in a real-time fashion.

In view of the above, the methods presented herein rely on look-up tables describing relations between torques, currents and flux linkages, for obtaining current reference vectors and flux linkage vectors. All vectors herein are in the dq-coordinate system that rotates with a rotor speed of the synchronous machine.

The current reference vectors and the flux linkage vectors are used in the synchronous machine model, i.e. the model describing the dynamics of the synchronous machine to obtain voltage reference vectors. In parallel with this process a voltage regulation is provided by means of regulator, based on the difference between the current reference vector and a measured current. The output of the regulator is an adjustment part voltage vector which is used to obtain a flux linkage adjustment vector and a torque reference error. The flux linkage adjustment vector is fed back as an input parameter to the model and the torque reference error is used to determine a compensated torque reference. The compensated torque is used to determine a new current reference vector by means of one or more look-up table. The new current reference vector is fed to the model, wherein an adjusted voltage reference vector is obtained based the new current reference and the flux linkage adjustment vector. This voltage reference vector is herein referred to as an adjusted voltage reference vector because of the flux linkage adjustment vector that provides an adjustment of the voltage reference vector that would otherwise be generated. In parallel with this process, again the regulator outputs a new adjustment part voltage vector. A new adjusted voltage reference vector is obtained by summing the adjusted voltage reference vector and the new adjustment part vector.

By means of feeding back the flux linkage adjustment vector and the torque reference error real-time adjustment of any model mismatch may be obtained. In the event that no model mismatch would be present, the adjustment part voltage vector would be zero, and thus the flux linkage adjustment vector and the torque reference error would also be zero. This method is iterated during the entire control operation. The adjusted voltage reference vector is used for controlling the synchronous machine.

A further aspect of the control method is flux-weakening without an external voltage regulation loop. This flux-weakening is an additional aspect that may be implemented in the main method described above.

Flux-weakening refers to control when the synchronous machine has exceeded a limit speed, i.e. the nominal speed, and the synchronous machine voltage has reached a limit voltage, i.e. the nominal voltage. This aspect of the method utilises the d-axis current component and the q-axis current component to obtain the voltage vector reference, utilising the flux linkage adjustment vector as explained above. This method however further includes a "sub" iteration that involves reducing the d-axis current component as long the adjusted voltage reference vector has a greater magnitude than the limit voltage and the current speed is greater than the limit speed. In this case a new adjusted voltage reference vector or an updated new adjusted voltage reference vector, depending on the particular realisation of the method, is obtained in every iteration of the flux weakening control operation. When the new adjusted voltage reference vector or updated new adjusted voltage reference vector obtains a magnitude smaller than or equal to the magnitude of the limit voltage, the corresponding d-axis component and q-axis component are selected as the current reference vector and the new adjusted voltage reference vector or updated new adjusted voltage reference vector is selected as the adjusted voltage reference vector used for controlling the synchronous machine.

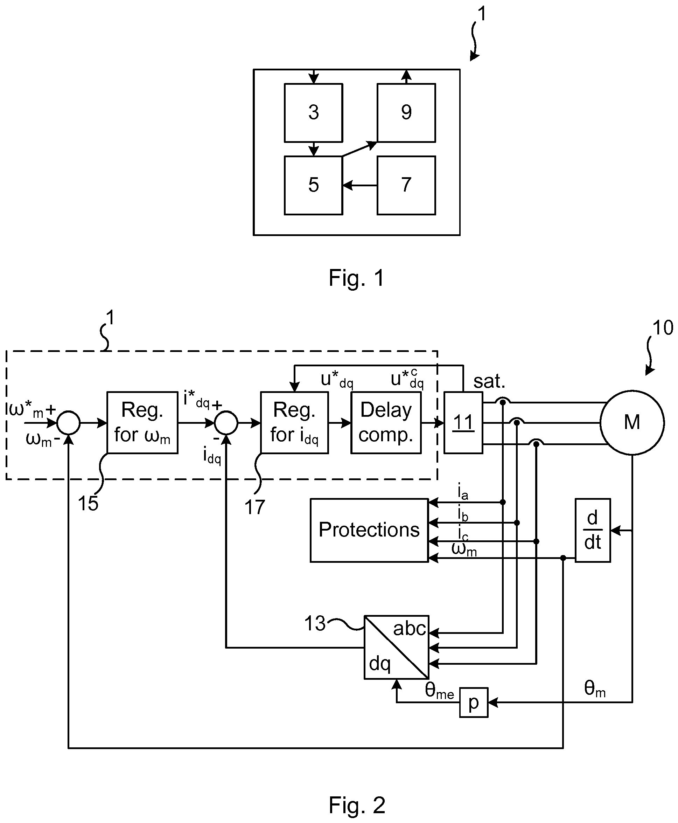

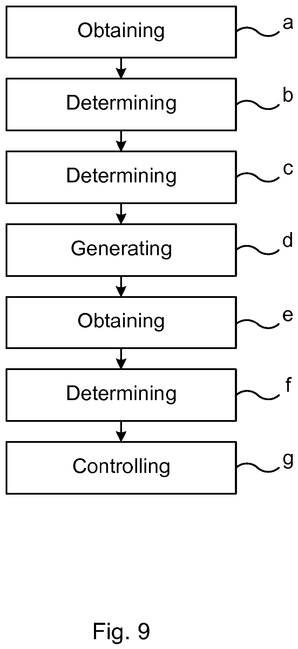

These methods will now be described in more detail with reference to Figs. 1-9.

Fig. 1 shows a block diagram of a controller 1 configured to control a synchronous machine by means of an electrical drive. The controller 1 comprises an input unit 3 configured to receive a measured current of the synchronous machine, a storage unit 7 comprising computer code, a processing unit 5, and an output unit 9 arranged to send control signals to an electrical drive for controlling the synchronous machine. The controller 1 is configured to control a synchronous machine by means of an electrical drive according to the methods that will be described in more detail in the following, when the computer code stored in the storage unit 7 is run on the processing unit 5.

Fig. 2 shows an overall control scheme for the controller 1. Fig. 2 furthermore schematically shows a synchronous machine control system 10 including the controller 1, an electrical drive 11 and a synchronous machine M. The controller 1 comprises the blocks that are surrounded by the dashed line; in particular a torque regulation block 15 and a current reference and regulation block 17. The controller 1 is configured to control the electrical drive 1, for example an inverter, which in turn controls the electrical machine M, for example a motor. The synchronous machine control system 10 includes a Park's transform functional block 13 configured to transform the measured current the electrical phases a, b, and c to a dq-coordinate system.

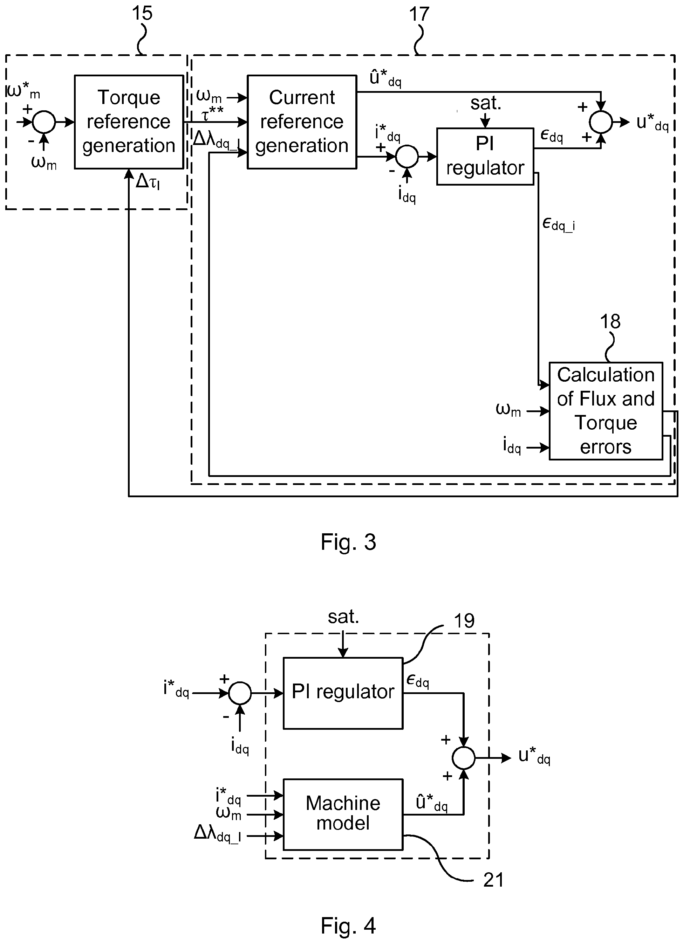

Fig. 3 shows a block diagram which in more detail illustrates the torque reference generation block 15 and the current reference and regulation block 17. The current reference and regulation block 17 includes a flux and torque error estimation block 18. The current reference and regulation block 17 will be described in more detail in what follows.

The processing unit 5 of the controller 1 is configured to perform all the steps presented below.

In a step a) a current reference vector $i_{dq}^*$ for a torque reference $\tau^*$ is obtained from at least one current look-up table LUT-$i_d$, LUT-$i_q$. The at least one current look-up table describes relations between currents and torques under a plurality of conditions for the synchronous machine.

In case that the method does not include the flux-weakening aspect, there may be only one current look-up table. This current look-up table may be based on a plurality of graphs each corresponding to a different torque value plotted with respect to the d-axis current components and the q-axis current components. Each graph thus corresponds to one torque value for a plurality of combinations of the d-axis current component and the q-axis current component. The d-axis current components and q-axis current components for different torques in the look-up table may be derived from these graphs.

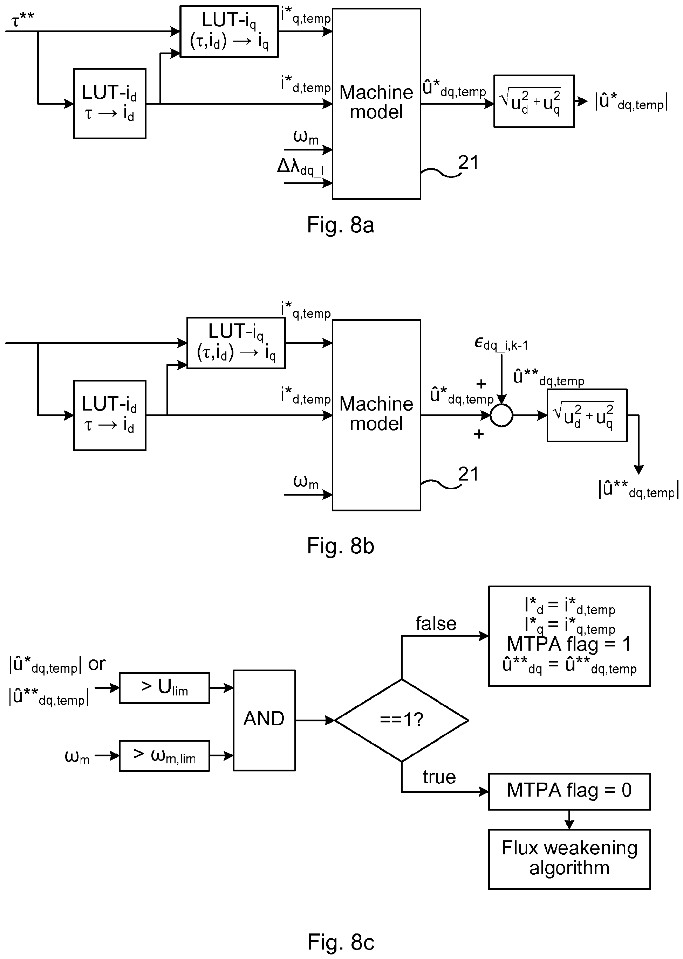

There may alternatively be two current look-up tables available. The d-axis component of the current reference vector is obtained from a d-axis component look-up table LUT-$i_d$ and a q-axis component of the current reference vector is obtained from a q-axis component look-up table LUT-$i_q$, as shown in Figs 8a and 8b. The d-axis component look-up table comprises a plurality of d-axis current component reference values for each torque value, and the q-axis component look-up table comprises a plurality of q-axis current component reference values for each torque value and each d-axis component value.

Furthermore in step a) a flux linkage vector $\lambda_{dq}$ for the current reference vector is obtained from a flux linkage look-up table LUT-$\lambda$ describing relations between currents and flux linkages. The flux linkage look-up table describes the relations between flux linkages and currents for a plurality of combinations of d-axis current components and q-axis current components, i.e. current reference vectors $i_{dq}^*$.

In a step b) an adjustment part voltage vector $\epsilon_{dq}$ is determined by means of a regulator. The regulator 19 may for example be a Pi-regulator, a dead-beat regulator, a hysteresis regulator, or a predictive regulator. The adjustment part voltage vector $\epsilon_{dq}$ is determined based on a difference between the current reference vector $i_{dq}^*$ and a measured current $i_{dq}$ as shown in Fig. 4.

Parallel with the determining of the adjustment part voltage vector $\epsilon_{dq}$ a preliminary voltage reference vector $\hat{u}_{dq}^*$ is determined by means of a model 21 describing the dynamics of the synchronous machine M. This model 21 may be described by means of equation (1).

$$u_{dq} = R_s i_{dq} + \frac{d}{dt}\lambda_{dq} + \omega_{me}J\lambda_{dq} \qquad (1)$$

$R_s$ is a matrix of the stator resistance, $J$ is the decoupling matrix for the voltage equation, and $\omega_m$ is the mechanical rotor speed of the synchronous machine M. $u_{dq}$, $i_{dq}$, and $\lambda_{dq}$ are vectors with two components, i.e. a d-component and a q-component.

The adjustment part voltage vector $\epsilon_{dq}$ is summed with the preliminary voltage reference vector $\hat{u}_{dq}^*$ to obtain an adjusted voltage reference vector $u_{dq}^*$. This adjusted voltage reference vector $u_{dq}^*$ is used for controlling the synchronous machine M by means of the electrical drive 11 in the first iteration of the method.

In a step c) a flux linkage adjustment vector $\Delta\lambda_{dq\_I}$ and a torque reference error $\Delta\tau_I$, are determined based on the adjustment part voltage vector $\epsilon_{dq}$ and on the measured current $i_{dq}$. The flux linkage adjustment vector $\Delta\lambda_{dq\_I}$ and the torque reference error $\Delta\tau_I$ may be determined further based on the mechanical rotor speed $\omega_m$, i.e. the measured speed of the synchronous machine.

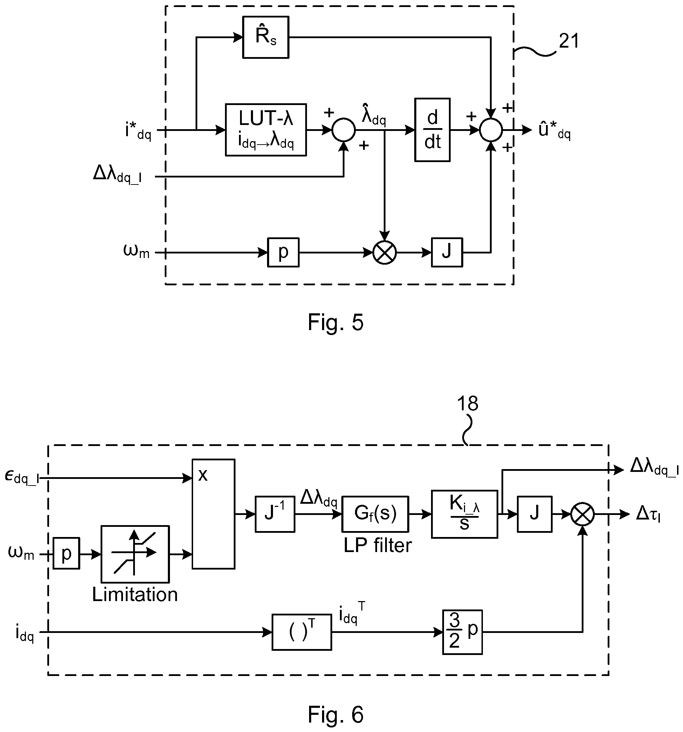

According to one variation, the flux linkage adjustment vector $\Delta\lambda_{dq\_I}$ and the torque reference error $\Delta\tau_I$ are determined based on an integral part $\epsilon_{dq\_I}$ of the first adjustment part voltage vector $\epsilon_{dq}$ as shown in Fig. 6. In the very first iteration of the method the flux linkage adjustment vector $\Delta\lambda_{dq\_I}$ is zero.

The flux linkage adjustment vector $\Delta\lambda_{dq\_I}$ is determined by the flux and torque error estimation block 18, by means of equation (2).

$$\Delta\lambda_{dq} = \frac{1}{\omega_{me}}J^{-1}\epsilon_{dq\_i} \qquad (2)$$

The flux linkage adjustment vector $\Delta\lambda_{dq\_I}$ is hence obtained by the product of the inverse of the decoupling matrix for the voltage equation and the integral part $\epsilon_{dq\_i}$ of the first adjustment part voltage vector $\epsilon_{dq}$. The torque reference error $\Delta\tau_I$ may be determined by the flux and torque error estimation block 18 by means of equation (3) below.

$$\Delta\tau_I = \frac{3}{2}p \cdot i_{dq}^T J\Delta\lambda_{dq\_I} \qquad (3)$$

$p$ is the number of pole pairs of the synchronous machine. The torque reference error $\Delta\tau_I$ is hence obtained from the product of the current reference vector, the decoupling matrix for the voltage equation, and the flux linkage adjustment vector $\Delta\lambda_{dq\_I}$ and a constant (3/2)p which is a scaling of the number of pole pairs.

The torque reference error $\Delta\tau_I$ is sent back to the torque reference block 15 and is utilised to determine a compensated torque reference $\tau^{**}$, as shown in Fig. 3. Hence, in step d) the compensated torque reference $\tau^{**}$, is

generated by summing the torque reference $\tau^*$ and the torque reference error $\Delta\tau_l$. A new current reference vector $i^*_{dq}$ is determined for the compensated torque reference $\tau^{**}$.

Thus in a step e) a new current reference vector $i^*_{dq}$ is obtained for the compensated torque reference, from the at least one current look-up table LUT-i$_d$, LUT-i$_q$. Moreover a new flux linkage vector $\lambda_{dq}$ is obtained for the new current reference vector from the flux linkage look-up table LUT-$\lambda$.

These look-up tables are the same as previously. Thus in the case of two look-up tables, the d-axis component of the new current reference vector is obtained from the d-axis component look-up table and a q-axis component of the new current reference vector is obtained from the q-axis component look-up table.

In a step f) an adjusted voltage reference vector $\hat{u}^*_{dq}$ is determined based on the new current reference vector $i^*_{dq}$, and on the sum $\hat{\lambda}_{dq}$ of the new flux linkage vector $\lambda_{dq}$ and the flux linkage adjustment vector $\Delta\lambda_{dq\_l}$ by means of the model 21, as shown in Fig. 5. Any inaccuracy of the flux linkage look-up table LUT-$\lambda$ is thus compensated for by the flux linkage adjustment vector $\Delta\lambda_{dq\_l}$.

In a step f) a new adjusted voltage reference vector $u^*_{dq}$ is determined by summing the adjusted voltage reference vector $\hat{u}^*_{dq}$ and a new adjustment part voltage vector $\varepsilon_{dq}$ that is obtained from the regulator 19 based on a difference between the new current reference vector $i^*_{dq}$ and a measured current $i_{dq}$. Step f) is typically not carried out during flux-weakening control, which will be described below.

Finally, in a step g) the synchronous machine M is controlled by means of the electrical drive 11 based on the adjusted voltage reference vector $u^*_{dq}$. In particular, in the absence of flux-weakening control in step g) the control is performed by means of the new adjusted voltage reference vector $u^*_{dq}$, which is based on the adjusted voltage reference vector $\hat{u}^*_{dq}$. This procedure is iterated during the entire control operation when no flux-weakening control is being performed.

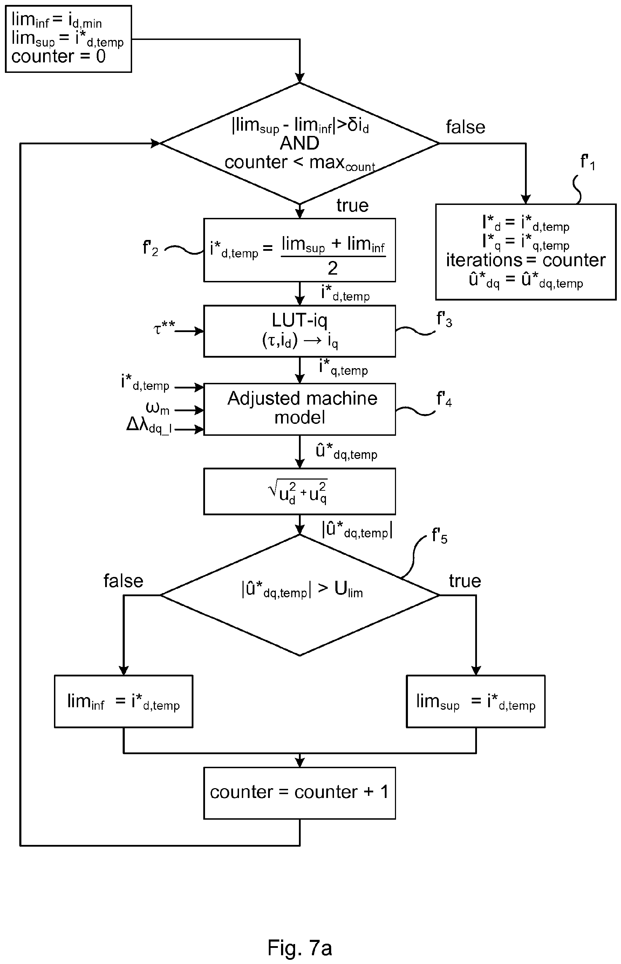

The flux-weakening process, which may be incorporated as a flux-weakening aspect in the above-described method, will now be described in more detail with reference to Figs 7a-b and 8a-c. The flux-weakening aspect is directed to finding a current reference vector $i^*_{dq}$ in an iterative manner when the measured speed of the synchronous machine is above the nominal speed and the voltage of the synchronous machine tends to be above its nominal value. In particular the current reference vector $i^*_{dq}$ that is being sought after reduces the voltage of the synchronous machine to obtain a value below or equal to the nominal voltage. When this current reference vector has been found the corresponding adjusted voltage reference vector $\hat{u}^*_{dq}$ or adjusted new voltage reference vector $\hat{u}^{**}_{dq}$, depending on the particular implementation of the method, is utilised to control the synchronous machine in the same manner as described above.

In variations of the method that include the flux-weakening aspect in step e) the new current reference vector $i^*_{dq}$ is obtained by first obtaining from the d-axis component look-up table a d-axis current component under maximum torque per ampere, MTPA, conditions, for the compensated torque reference and subsequently obtaining from the q-axis component look-up table a q-axis current component for the compensated torque reference and the current component for the d-axis. This is illustrated for example in Fig. 8c.

Two examples of the flux-weakening control will be described in the following.

Step f) may further comprise comparing the magnitude of the adjusted voltage reference vector $u^*_{dq}$, denoted $\hat{u}^*_{dq,temp}$ and $\hat{u}^{**}_{dq,temp}$ Figs 7a-b and 8a-c, with a limit voltage $U_{lim}$ of the synchronous machine M. The magnitude of the adjusted voltage reference vector $\hat{u}^*_{dq,temp}$, $\hat{u}^{**}_{dq,temp}$ is denoted by

$$\left|\hat{u}^*_{dq,temp}\right| = \left|\hat{u}^{**}_{dq,temp}\right| = \sqrt{u^2_d + u^2_q}$$ and is hence the length of the adjusted voltage reference vector $u^*_{dq}$.

The limit voltage $U_{lim}$ is the nominal voltage of the synchronous machine, which is obtained at nominal torque and nominal speed of the synchronous machine M. Step f) may further comprise comparing the measured speed $\omega_m$ of the synchronous machine M with a limit speed $\omega_{m,lim}$ of the synchronous machine M. In case the magnitude of the adjusted voltage reference vector is equal to or smaller than the limit voltage $U_{lim}$ or the measured speed $\omega_m$ is less than or equal to the limit speed $\omega_{m,lim}$, in a step f1) the d-axis current component and the q-axis current component are set as the new current reference vector $i^*_{dq}$.

In case the magnitude of the adjusted voltage reference vector is greater than the limit voltage and the measured speed is greater than the limit speed, the first example of the method comprises the following iterative search steps, as shown in Fig. 7a and Fig. 8a.

In a step f2) a new d-axis current component $i^*_{d,temp}$ is obtained by reducing the d-axis current component towards a minimum d-axis current component $i_{d,min}$. The minimum d-axis current component $i_{d,min}$ may be the minimum d-axis current component possible for the synchronous machine M. The new d-axis current component $i^*_{d,temp}$ may according to one variation be obtained by averaging the d-axis current component and the minimum d-axis current component.

In a step f3) a new q-axis current component $i^*_{q,temp}$ for the new d-axis current component and the compensated torque reference is obtained from the q-axis component look-up table LUT-$i_q$.

In a step f4) a new adjusted voltage reference vector $u^*_{dq,temp}$ is obtained based on the new current component for the d-axis $i^*_{d,temp}$, the new q-axis current component $i^*_{q,temp}$ and on the sum of the new flux linkage vector and the flux linkage adjustment vector by means of the model 21 in the same manner as described in conjunction with equation (1) and step f). In a step f5) the magnitude of the new adjusted voltage reference vector $\hat{u}^*_{dq,temp}$ is compared with the limit voltage $U_{lim}$, and the measured speed of the synchronous machine M is compared with the limit speed $\omega_{m,lim}$. Steps f2) to f$_5$) are repeated until the magnitude of the new adjusted voltage reference vector is equal to or smaller than the limit voltage, as shown in the flowchart in Fig. 7a. When the magnitude of the new adjusted voltage reference vector is equal to or smaller than the limit voltage, the new d-axis current component and the new q-axis current component are set as the new current reference vector and the new adjusted voltage reference vector is set as the adjusted voltage reference vector for controlling the synchronous machine M in step g).

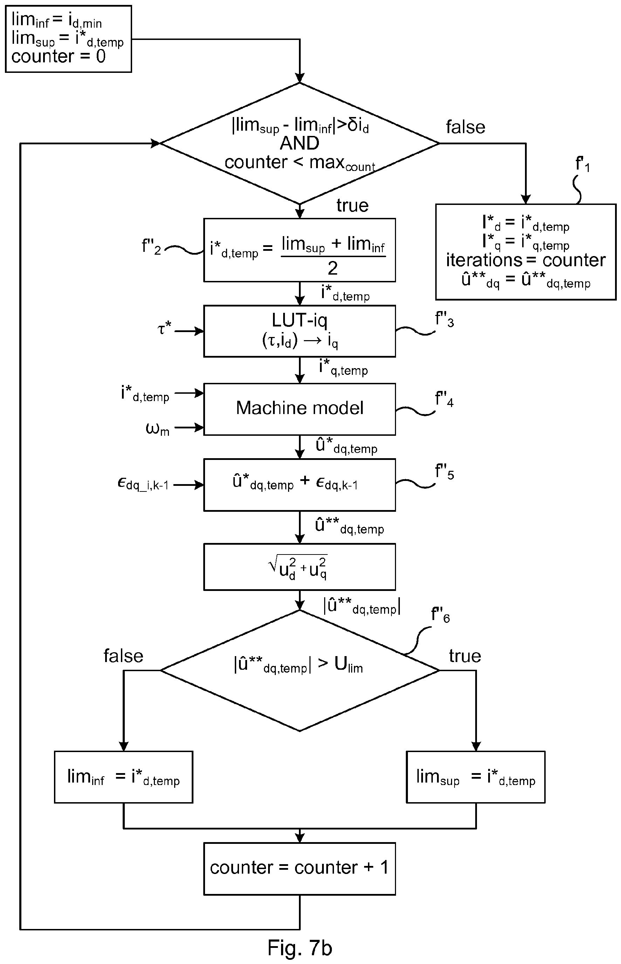

In the second example shown in the flowchart in Fig. 7b and in Fig. 8b, method steps f''2-f''3) are identical to steps f2) and f3). However in the second example, in an alternative step f''4) a new adjusted voltage reference vector $u^{**}_{dq,temp}$ is obtained based on the new current component for the d-axis $i^*_{d,temp}$, the new q-axis current component $i^*_{q,temp}$ by means of the model 21.

In this variation the new adjusted reference vector $u^{**}_{dq,temp}$ is obtained without utilising the flux linkage adjustment vector.

Furthermore in a step f''5) an updated new adjusted voltage reference vector $\hat{u}^{**}_{dq,temp}$ is determined by summing the new adjusted voltage reference vector $u^{**}_{dq,temp}$ and a new adjustment part voltage vector $\epsilon_{dq\_i,k-1}$ that is obtained from the regulator 19 based on a difference between the a vector formed by the new d-axis current component $i^*_{d,temp}$ and the new q-axis current and component $i^*_{q,temp}$, and the measured current $i_{dq}$. Here, the new adjustment part voltage vector $\epsilon_{dq\_i,k-1}$ may be obtained in the previous iteration of the control method presented herein.

In a step f''6) the magnitude of the updated new adjusted voltage reference vector $\hat{u}^*_{dq,temp}$ is compared with the limit voltage $U_{lim}$, and the measured speed of the synchronous machine M is compared with the limit speed $\omega_{m,lim}$. Steps f''2) to f''6) are repeated until the magnitude of the updated new adjusted voltage reference vector is equal to or smaller than the limit voltage, as shown in the flowchart in Fig. 7b. When the magnitude of the updated new adjusted voltage reference vector is equal to or smaller than the limit voltage, the new d-axis current component and the new q-axis current component are set as the new current reference vector and the updated new adjusted voltage reference vector is set as the adjusted voltage reference vector for controlling the synchronous machine M in step g).

The inventive concept has mainly been described above with reference to a few examples. However, as is readily appreciated by a person skilled in the art, other embodiments than the ones disclosed above are equally possible within the scope of the inventive concept, as defined by the appended claims.

**Claims**

1. A method of controlling a synchronous machine (M) by means of an electrical drive (11), wherein the method comprises:

   a) obtaining a current reference vector $\left(i_{dq}^{*}\right)$ for a torque reference ($\tau^{*}$), from at least one current look-up table (LUT-$i_d$, LUT-$i_q$), which at least one current look-up table (LUT-$i_d$, LUT-$i_q$) describes relations between currents and torques for the synchronous machine (M), and obtaining a flux linkage vector ($\lambda_{dq}$) for the current reference vector $\left(i_{dq}^{*}\right)$, from a flux linkage look-up table (LUT-$\lambda$) describing relations between currents and flux linkages,

   b) determining an adjustment part voltage vector ($\varepsilon_{dq}$) by means of a regulator (19), based on a difference between the current reference vector $\left(i_{dq}^{*}\right)$ and a measured current ($i_{dq}$),

   **characterised by**

   c) determining a flux linkage adjustment vector ($\Delta\lambda_{dq\_l}$) and a torque reference error ($\Delta\tau_l$) based on the adjustment part voltage vector ($\varepsilon_{dq}$), the torque reference error ($\Delta\tau_l$) being determined further based on the measured current ($i_{dq}$),

   d) generating a compensated torque reference ($\tau^{**}$) by summing the torque reference ($\tau^{*}$) and the torque reference error ($\Delta\tau_l$),

   e) obtaining a new current reference vector $\left(i_{dq}^{*}\right)$ for the compensated torque reference $\left(\tau^{**}\right)$, from the at least one current look-up table (LUT-$i_d$, LUT-$i_q$), and obtaining a new flux linkage vector ($\lambda_{dq}$) for the new current reference vector $\left(i_{dq}^{*}\right)$ from the flux linkage look-up table (LUT-$\lambda$),

   f) determining an adjusted voltage reference vector $\left(\hat{u}_{dq}^{*}\right)$ based on the new current reference vector $\left(i_{dq}^{*}\right)$, and on the sum of the new flux linkage vector ($\lambda_{dq}$) and the flux linkage adjustment vector ($\Delta\lambda_{dq\_l}$) by means of a model (21) describing the dynamics of the synchronous machine (M), and

   g) controlling the synchronous machine (M) by means of the electrical drive (11) based on the adjusted voltage reference vector $\left(\hat{u}_{dq}^{*}\right)$.

2. The method as claimed in claim 1, comprising f') determining a new adjusted voltage reference vector $\left(u_{dq}^{*}\right)$ by summing the adjusted voltage reference vector $\left(\hat{u}_{dq}^{*}\right)$ and a new adjustment part voltage vector ($\varepsilon_{dq}$) that is obtained from the regulator (19) based on a difference between the new current reference vector $\left(i_{dq}^{*}\right)$ and a measured current $\left(i_{dq}\right)$, wherein in step g) the controlling is based on the new adjusted voltage reference vector $\left(u_{dq}^{*}\right)$.

3. The method as claimed in any of the preceding claims, wherein the current reference vector $\left(i_{dq}^{*}\right)$ and the new current reference vector $\left(i_{dq}^{*}\right)$ are vectors in a dq-coordinate system that rotates with a rotor speed of the synchronous machine (M).

4. The method as claimed in any of the preceding claims, wherein a d-axis current component of the current reference vector $\left(i_{dq}^{*}\right)$ and a d-axis current component of the new current reference vector $\left(i_{dq}^{*}\right)$ are obtained from a d-axis component look-up table (LUT-$i_d$) and a q-axis current component of the current reference vector and a q-axis current component of the new current reference vector are obtained from a q-axis component look-up table (LUT-$i_q$), the d-axis component look-up table comprising a plurality of d-axis current component reference values for each torque value, and the q-axis component look-up table comprising a plurality of q-axis current component reference values for each torque value and each d-axis component value, wherein in step a) and in step e) a current reference vector $\left(i_{dq}^{*}\right)$ with minimal length is selected as the current reference vector $\left(i_{dq}^{*}\right)$ and the new current reference vector $\left(i_{dq}^{*}\right)$, respectively.

5. The method as claimed in claim 4, wherein in step c) the flux linkage adjustment vector ($\Delta\lambda_{dq\_l}$) and the torque reference error ($\Delta\tau_l$) are determined based on an integral part ($\varepsilon_{dql}$) of the adjustment part voltage vector ($\varepsilon_{dq}$).

6. The method as claimed in any of the preceding claims, wherein the flux linkage adjustment vector ($\Delta\lambda_{dq\_l}$) and the torque reference error ($\Delta\tau_l$) are determined further based on a measured speed ($\omega_m$) of the synchronous machine (M).

7. The method as claimed in any of claims 3-6, wherein in step e) the new current reference vector is obtained by first obtaining from the d-axis component look-up table (LUT-i$_d$) a d-axis current component under maximum torque per ampere, MTPA, conditions, for the compensated torque reference ($\tau^{**}$), and subsequently obtaining from the q-axis component look-up table (LUT-i$_q$) a q-axis current component for the compensated torque reference ($\tau^{**}$) and the d-axis current component.

8. The method as claimed in claim 7, wherein step f) further comprises comparing the magnitude $\left(\left|\hat{u}_{dq,temp}^{*}\right|\right)$ of the adjusted voltage reference vector with a limit voltage ($U_{lim}$) of the synchronous machine (M) when a measured speed ($\omega_m$) of the synchronous machine (M) is higher than a limit speed ($\omega_{m,lim}$) of the synchronous machine (M), wherein in case the magnitude $\left(\left|\hat{u}_{dq,temp}^{*}\right|\right)$ of the adjusted voltage reference vector $\left(u_{dq}^{*},\ \hat{u}_{dq,temp}^{*}\right)$ is smaller than the limit voltage ($U_{lim}$), f1) setting the d-axis current component and the q-axis current component as the new current reference vector $\left(i_{dq}^{*}\right)$.

9. The method as claimed in claim 8, wherein in case the magnitude $\left(\left|\hat{u}_{dq,temp}^{*}\right|\right)$ of the adjusted voltage reference vector is greater than the limit voltage ($U_{lim}$) and the measured speed ($\omega_m$) is greater than the limit speed ($\omega_{m,lim}$), the method comprises:

f2) obtaining a new d-axis current component $\left(i_{d,temp}^{*}\right)$ by reducing the d-axis current component towards a minimum d-axis current component ($i_{d,min}$),

f3) obtaining from the q-axis component look-up table (LUT-i$_q$) a new q-axis current component $\left(i_{q,temp}^{*}\right)$ for the new d-axis current component $\left(i_{d,temp}^{*}\right)$ and the compensated torque reference ($\tau^{**}$),

f4) obtaining a new adjusted voltage reference vector $\left(u_{dq,temp}^{*}\right)$ based on the new current component for the d-axis $\left(i_{d,temp}^{*}\right)$, the new q-axis current component $\left(i_{q,temp}^{*}\right)$ and on the sum of the new flux linkage vector and the flux linkage adjustment vector by means of the model (21),

f5) comparing the magnitude $\left(\left|\hat{u}_{dq,temp}^{*}\right|\right)$ of the new adjusted voltage reference vector $\left(\hat{u}_{dq,temp}^{*}\right)$ with the limit voltage ($U_{lim}$),

repeating steps f2) to f5) until the magnitude $\left(\left|\hat{u}_{dq,temp}^{*}\right|\right)$ of the new adjusted voltage reference vector $\left(\hat{u}_{dq,temp}^{*}\right)$ is equal to or smaller than the limit voltage ($U_{lim}$), and when the magnitude $\left(\left|\hat{u}_{dq,temp}^{*}\right|\right)$ of the new adjusted voltage reference vector $\left(\hat{u}_{dq,temp}^{*}\right)$ is equal to or smaller than the limit voltage ($U_{lim}$), setting the new d-axis current component $\left(i_{d,temp}^{*}\right)$ and the new q-axis current component $\left(i_{q,temp}^{*}\right)$ as the new current reference vector $\left(i_{dq}^{*}\right)$ and the new adjusted voltage reference vector $\left(\hat{u}_{dq,temp}^{*}\right)$ as the adjusted voltage reference vector $\left(u_{dq}^{*}\right)$.

10.

The method as claimed in claim 8, wherein in case the magnitude $(|\hat{u}_{dq,temp}^{**}|)$ of the adjusted voltage reference vector is greater than the limit voltage ($U_{lim}$) and the measured speed ($\omega_m$) is greater than the limit speed ($\omega_{m,lim}$), the method comprises:

f"2) obtaining a new d-axis current component $(i_{d,temp}^{*})$ by reducing the d-axis current component towards a minimum d-axis current component ($i_{d,min}$),

f"3) obtaining from the q-axis component look-up table (LUT-$i_q$) a new q-axis current component $(i_{q,temp}^{*})$ for the new d-axis current component $(i_{d,temp}^{*})$ and the compensated torque reference($\tau^{**}$),

f"4) obtaining a new adjusted voltage reference vector $(u_{dq,temp}^{**})$ based on the new current component for the d-axis $(i_{d,temp}^{*})$ and the new q-axis current component $(i_{q,temp}^{*})$, by means of the model (21),

f"5) determining an updated new adjusted voltage reference vector $(\hat{u}_{dq,temp}^{**})$ by summing the new adjusted voltage reference vector $(u_{dq,temp}^{**})$ and a new adjustment part voltage vector ($\varepsilon_{dq\_i,k-1}$) that is obtained from the regulator (19) based on a difference between a vector formed by the new d-axis current component $(i_{d,temp}^{*})$ and the new q-axis current and component $(i_{q,temp}^{*})$, and a measured current ($i_{dq}$),

f") comparing the magnitude $(|\hat{u}_{dq,temp}^{**}|)$ of the adjusted new voltage reference vector $(\hat{u}_{dq,temp}^{**})$ with the limit voltage ($U_{lim}$),

repeating steps f"2) to f"6) until the magnitude $(|\hat{u}_{dq,temp}^{**}|)$ of the updated new adjusted voltage reference vector $(\hat{u}_{dq,temp}^{**})$ is equal to or smaller than the limit voltage ($U_{lim}$), and when the magnitude $(|\hat{u}_{dq,temp}^{**}|)$ of the updated new adjusted voltage reference vector $(\hat{u}_{dq,temp}^{**})$ is equal to or smaller than the limit voltage ($U_{lim}$),

setting the new d-axis current component $(i_{d,temp}^{*})$ and the new q-axis current component $(i_{q,temp}^{*})$ as the new current reference vector $(i_{dq}^{*})$ and the updated new adjusted voltage reference vector $(\hat{u}_{dq,temp}^{**})$ as the new adjusted voltage reference vector $(u_{dq}^{*})$.

11. A computer program for controlling a synchronous machine (M) by means of an electrical drive (11), wherein the computer program comprises computer code which, when run on a processing unit of a controller (1), causes the controller (1) to:

a) obtain a current reference vector $(i_{dq}^{*})$ for a torque reference ($\tau^*$), from at least one current look-up table (LUT-$i_d$, LUT-$i_q$), which at least one current look-up table (LUT-$i_d$, LUT-$i_q$) describes the relations between currents and torques for the synchronous machine (M), and obtaining a flux linkage vector ($\lambda_{dq}$) for the current reference vector $(i_{dq}^{*})$, from a flux linkage look-up table (LUT-$\lambda$) describing the relations between currents and flux linkages,

b) determine an adjustment part voltage vector ($\varepsilon_{dq}$) by means of a regulator (19), based on a difference between the current reference vector $(i_{dq}^{*})$ and a measured current ($i_{dq}$),

**characterised by**

c) determine a flux linkage adjustment vector ($\Delta\lambda_{dq\_l}$) and a torque reference error ($\Delta\tau_l$) based on the adjustment part voltage vector ($\varepsilon_{dq}$), the torque reference error ($\Delta\tau_l$) being determined further based on the measured current ($i_{dq}$),

d) generate a compensated torque reference ($\tau^{**}$) by summing the torque reference ($\tau^*$) and the torque reference error ($\Delta\tau_l$),

e) obtain a new current reference vector $\left(i_{dq}^*\right)$ for the compensated torque reference ($\tau^{**}$), from the at least one current look-up table (LUT-$i_d$, LUT-$i_q$), and obtaining a new flux linkage vector ($\lambda_{dq}$) for the new current reference vector $\left(i_{dq}^*\right)$ from the flux linkage look-up table (LUT-$\lambda$),

f) determine an adjusted voltage reference vector $\left(\hat{u}_{dq}^*\right)$ based on the new current reference vector $\left(i_{dq}^*\right)$, and on the sum of the new flux linkage vector ($\lambda_{dq}$) and the flux linkage adjustment vector ($\Delta\lambda_{dq\_l}$) by means of a model (21) describing the dynamics of the synchronous machine (M), and

g) control the synchronous machine (M) by means of the electrical drive (11) based on the adjusted voltage reference vector $\left(\hat{u}_{dq}^*\right)$.

12. A computer program product comprising a computer program as claimed in claim 11, and a storage unit (7) on which the computer program is stored.

13. A controller (1) configured to control a synchronous machine (M) by means of an electrical drive (11), wherein the controller (1) comprises:

a processing unit (5), and
a storage unit (7) containing computer code, wherein the computer code when run on the processing unit (5) causes the controller (1) to:

a) obtain a current reference vector $\left(i_{dq}^*\right)$ for a torque reference ($\tau^*$), from at least one current look-up table (LUT-$i_d$, LUT-$i_q$), which at least one current look-up table (LUT-$i_d$, LUT-$i_q$) describes relations between currents and torques for the synchronous machine (M), and obtaining a flux linkage vector ($\lambda_{dq}$) for the current reference vector $\left(i_{dq}^*\right)$, from a flux linkage look-up table (LUT-$\lambda$) describing relations between currents and flux linkages,

b) determine an adjustment part voltage vector ($\varepsilon_{dq}$) by means of a regulator (19), based on a difference between the current reference vector $\left(i_{dq}^*\right)$ and a measured current ($i_{dq}$),

wherein the controller is **characterised in that** the computer code when run on the processing unit (5) causes the controller (1) to:

c) determine a flux linkage adjustment vector ($\Delta\lambda_{dq\_l}$) and a torque reference error ($\Delta\tau_l$) based on the adjustment part voltage vector ($\varepsilon_{dq}$), the torque reference error ($\Delta\tau_l$) being determined further based on the measured current ($i_{dq}$),

d) generate a compensated torque reference ($\tau^{**}$) by summing the torque reference ($\tau^*$) and the torque reference error ($\Delta\tau_l$),

e) obtain a new current reference vector $\left(i_{dq}^*\right)$ for the compensated torque reference ($\tau^{**}$), from the at least one current look-up table (LUT-$i_d$, LUT-$i_q$), and obtaining a new flux linkage vector ($\lambda_{dq}$) for the new current reference vector $\left(i_{dq}^*\right)$ from the flux linkage look-up table (LUT-$\lambda$),

f) determine an adjusted voltage reference vector $\left(\hat{u}_{dq}^*\right)$ based on the new current reference vector $\left(i_{dq}^*\right)$, and on the sum of the new flux linkage vector ($\lambda_{dq}$) and the flux linkage adjustment vector ($\Delta\lambda_{dq\_l}$) by means of a model (21) describing the dynamics of the synchronous machine (M), and

g) control the synchronous machine (M) by means of the electrical drive (11) based on the adjusted voltage reference vector.

14. The controller (1) as claimed in claim 13, wherein the current reference vector and the new current reference vector are vectors in a dq-coordinate system that rotates with a rotor speed of the synchronous machine.

15. The controller (1) as claimed in claim 13 or 14, wherein a d-axis current component of the current reference vector and a d-axis current component of the new current reference vector are obtained from a d-axis component look-up table and a q-axis current component of the current reference vector and a q-axis current component of the new current reference vector are obtained from a q-axis component look-up table, the d-axis component look-up table comprising a plurality of d-axis current component reference values for each torque value, and the q-axis component look-up table comprising a plurality of q-axis current component reference values for each torque value and each d-axis component value, wherein the processing unit is configured to select a current reference vector with minimal length as the current reference vector and the new current reference vector.

**16.** A synchronous machine control system (10) comprising:

a synchronous machine (M),
an electrical drive (11) arranged to control the synchronous machine (M),
and
a controller (1) as claimed in any of claims 13-15, configured to control the electrical drive (11).

## Patentansprüche

**1.** Verfahren zum Steuern einer Synchronmaschine (M) mittels einer elektrischen Ansteuerung (11), wobei das Verfahren Folgendes umfasst:

a) Erhalten eines Stromreferenzvektors ($i_{dq}^*$) für eine Drehmomentreferenz ($\tau^*$) aus mindestens einer Strom-Nachschlagetabelle (LUT-i$_d$; LUT-i$_q$), wobei die mindestens eine Strom-Nachschlagetabelle (LUT-i$_d$; LUT-i$_q$) Beziehungen zwischen Strömen und Drehmomenten für die Synchronmaschine (M) beschreibt, und Erhalten eines Flussverkettungsvektors ($\lambda_{dq}$) für den Stromreferenzvektor ($i_{dq}^*$) aus einer Flussverkettung-Nachschlagetabelle (LUT-$\lambda$), die Beziehungen zwischen Strömen und Flussverkettungen beschreibt,
b) Bestimmen eines Anpassungsteilspannungsvektors ($\varepsilon_{dq}$) mittels eines Reglers (19) auf der Grundlage einer Differenz zwischen dem Stromreferenzvektor ($i_{dq}^*$) und einem gemessenen Strom ($i_{dq}$), **gekennzeichnet durch**
c) Bestimmen eines Flussverkettung-Anpassungsvektors ($\Delta\lambda_{dq\_l}$) und eines Drehmomentreferenzfehlers ($\Delta\tau_l$) auf der Grundlage des Anpassungsteilspannungsvektors ($\varepsilon_{dq}$), wobei der Drehmomentreferenzfehler ($\Delta\tau_l$) ferner auf der Grundlage des gemessenen Stroms ($i_{dq}$) bestimmt wird,
d) Erzeugen einer kompensierten Drehmomentreferenz ($\tau^{**}$) durch Summieren der Drehmomentreferenz ($\tau^*$) und des Drehmomentreferenzfehlers ($\Delta\tau_l$),
e) Erhalten eines neuen Stromreferenzvektors ($i_{dq}^*$) für die kompensierte Drehmomentreferenz ($\tau^{**}$) aus der mindestens einen Strom-Nachschlagetabelle (LUT-i$_d$; LUT-i$_q$) und Erhalten eines neuen Flussverkettungsvektors ($\lambda_{dq}$) für den neuen Stromreferenzvektor ($i_{dq}^*$) aus der Flussverkettung-Nachschlagetabelle (LUT-$\lambda$),
f) Bestimmen eines angepassten Spannungsreferenzvektors ($\hat{u}_{dq}^*$) auf der Grundlage des neuen Stromreferenzvektors ($i_{dq}^*$) und der Summe des neuen Flussverkettungsvektors ($\lambda_{dq}$) und des Flussverkettung-Anpassungsvektors ($\Delta\lambda_{dq\_l}$) mittels eines Modells (21), das die Dynamik der Synchronmaschine (M) beschreibt, und
g) Steuern der Synchronmaschine (M) mittels der elektrischen Ansteuerung (11) auf der Grundlage des angepassten Spannungsreferenzvektors ($\hat{u}_{dq}^*$).

**2.** Verfahren nach Anspruch 1, umfassend f') Bestimmen eines neuen angepassten Spannungsreferenzvektors ($u_{dq}^*$) durch Summieren des angepassten Spannungsreferenzvektors ($\hat{u}_{dq}^*$) und eines neuen Anpassungsteilspannungsvektors ($\varepsilon_{dq}$), der von dem Regler (19) auf der Grundlage einer Differenz zwischen dem neuen Stromreferenzvektor ($i_{dq}^*$) und einem gemessenen Strom ($i_{dq}$) erhalten wird, wobei in Schritt g) das Steuern auf dem neuen angepassten Spannungsreferenzvektor ($u_{dq}^*$) basiert.

**3.**

Verfahren nach einem der vorhergehenden Ansprüche, wobei der Stromreferenzvektor $(i^*_{dq})$ und der neue Strom-referenzvektor $(i^*_{dq})$ Vektoren in einem dq-Koordinatensystem sind, das mit einer Rotordrehzahl der Synchronmaschine (M) rotiert.

**4.** Verfahren nach einem der vorhergehenden Ansprüche, wobei eine d-Achsen-Stromkomponente des Stromrefe-renzvektors $(i^*_{dq})$ und eine d-Achsen-Stromkomponente des neuen Stromreferenzvektors $(i^*_{dq})$ aus einer d-Achsen-Komponenten-Nachschlagetabelle (LUT-$i_d$) erhalten werden und eine q-Achsen-Stromkomponente des Stromreferenzvektors und eine q-Achsen-Stromkomponente des neuen Stromreferenzvektors aus einer q-Achsen-Komponenten-Nachschlagetabelle (LUT-$i_q$) erhalten werden, wobei die d-Achsen-Komponenten-Nachschlagetabelle mehrere d-Achsen-Stromkomponenten-Referenzwerte für jeden Drehmomentwert umfassen und die q-Achsen-Komponenten-Nachschlagetabelle mehrere q-Achsen-Stromkomponenten-Referenzwerte für jeden Drehmomentwert und jeden d-Achsen-Komponentenwert umfassen, wobei in Schritt a) und in Schritt e) jeweils ein Strom-referenzvektor $(i^*_{dq})$ mit minimaler Länge als der Stromreferenzvektor $(i^*_{dq})$ und der neue Stromreferenzvektor $(i^*_{dq})$ ausgewählt wird.

**5.** Verfahren nach Anspruch 4, wobei in Schritt c) der Flussverkettung-Anpassungsvektor $(\Delta\lambda_{dq\_l})$ und der Drehmo-mentreferenzfehler $(\Delta\tau_l)$ auf der Grundlage eines Integralteils $(\varepsilon_{dql})$ des Anpassungsteilspannungsvektors $(\varepsilon_{dq})$ bestimmt werden.

**6.** Verfahren nach einem der vorhergehenden Ansprüche, wobei der Flussverkettung-Anpassungsvektor $(\Delta\lambda_{dq\_l})$ und der Drehmomentreferenzfehler $(\Delta\tau_l)$ ferner auf der Grundlage einer gemessenen Drehzahl $(\omega_m)$ der Synchronma-schine (M) bestimmt werden.

**7.** Verfahren nach einem der Ansprüche 3-6, wobei in Schritt e) der neue Stromreferenzvektor erhalten wird, indem zuerst unter Maximaldrehmoment-pro-Ampere-Bedingungen bzw. MTPA-Bedingungen für die kompensierte Dreh-momentreferenz $(\tau^{**})$ eine d-Achsen-Stromkomponente aus der d-Achsen-Komponenten-Nachschlagetabelle (LUT-$i_d$) erhalten wird und darauffolgend für die kompensierte Drehmomentreferenz $(\tau^{**})$ und die d-Achsen-Stromkomponente eine q-Achsen-Stromkomponente aus der q-Achsen-Komponenten-Nachschlagetabelle (LUT-$i_q$) erhalten wird.

**8.** Verfahren nach Anspruch 7, wobei Schritt f) ferner Vergleichen der Größe $(\left|\hat{u}^*_{dq,temp}\right|)$ des angepassten Span-nungsreferenzvektors mit einer Grenzspannung $(U_{lim})$ der Synchronmaschine (M), wenn eine gemessene Drehzahl $(\omega_m)$ der Synchronmaschine (M) höher als eine Grenzdrehzahl $(\omega_{m,lim})$ der Synchronmaschine (M) ist, umfasst, wobei im Falle, dass die Größe $(\left|\hat{u}^*_{dq,temp}\right|)$ des angepassten Spannungsreferenzvektors $(u^*_{dq}, \hat{u}^*_{dq,temp})$ kleiner als die Grenzspannung $(U_{lim})$ ist, f1) Einstellen der d-Achsen-Stromkomponente und der q-Achsen-Stromkomponente als der neue Stromreferenzvektor $(i^*_{dq})$.

**9.** Verfahren nach Anspruch 8, wobei im Falle, dass die Größe $(\left|\hat{u}^*_{dq,temp}\right|)$ des angepassten Spannungsreferenz-vektors größer als die Grenzspannung $(U_{lim})$ ist und die gemessene Drehzahl $(\omega_m)$ größer als die Grenzdrehzahl $(\omega_{m,lim})$ ist, das Verfahren Folgendes umfasst:

f2) Erhalten einer neuen d-Achsen-Stromkomponente $(i^*_{d,temp})$ durch Reduzieren der d-Achsen-Stromkomponente auf eine minimale d-Achsen-Stromkomponente $(i^*_{d,min})$,

f3) Erhalten aus der q-Achsen-Komponenten-Nachschlagetabelle (LUT-$i_q$) einer neuen q-Achsen-Stromkom-ponente $(i^*_{q,temp})$ für die neue d-Achsen-Stromkomponente $(i^*_{d,temp})$ und die kompensierte Drehmomen-treferenz $(\tau^{**})$,

f4) Erhalten eines neuen angepassten Spannungsreferenzvektors $(u^*_{dq,temp})$ auf der Grundlage der neuen Stromkomponente für die d-Achse ($i^*_{d,temp}$), der neuen q-Achsen-Stromkomponente ($i^*_{q,temp}$) und der Summe des neuen Flussverkettungsvektors und des Flussverkettung-Anpassungsvektors mittels des Modells (21), f5) Vergleichen der Größe ($|\hat{u}^*_{dq,temp}|$) des neuen angepassten Spannungsreferenzvektors ($\hat{u}^*_{dq,temp}$) mit der Grenzspannung ($U_{lim}$),

Wiederholen der Schritte f2) bis f5) bis die Größe ($|\hat{u}^*_{dq,temp}|$) des neuen angepassten Spannungsreferenz-vektors ($\hat{u}^*_{dq,temp}$) kleiner oder gleich der Grenzspannung ($U_{lim}$) ist, und wenn die Größe ($|\hat{u}^*_{dq,temp}|$) des neuen angepassten Spannungsreferenzvektors ($\hat{u}^*_{dq,temp}$) kleiner oder gleich der Grenzspannung ($U_{lim}$) ist,

Einstellen der neuen d-Achsen-Stromkomponente ($i^*_{d,temp}$) und der neuen q-Achsen-Stromkomponente ($i^*_{q,temp}$) als der neue Stromreferenzvektor ($i^*_{dq}$) und des neuen angepassten Spannungsreferenzvektors ($\hat{u}^*_{dq,temp}$) als der angepasste Spannungsreferenzvektor ($\hat{u}^*_{dq}$).

**10.** Verfahren nach Anspruch 8, wobei im Falle, dass die Größe ($|\hat{u}^{**}_{dq,temp}|$) des angepassten Spannungsreferenz-vektors größer als die Grenzspannung ($U_{lim}$) ist und die gemessene Drehzahl ($\omega_m$) größer als die Grenzdrehzahl ($\omega_{m,lim}$) ist, das Verfahren Folgendes umfasst:

f"2) Erhalten einer neuen d-Achsen-Stromkomponente ($i^*_{d,temp}$) durch Reduzieren der d-Achsen-Stromkomponente auf eine minimale d-Achsen-Stromkomponente ($i^*_{d,min}$),

f"3) Erhalten aus der q-Achsen-Komponenten-Nachschlagetabelle (LUT-$i_q$) einer neuen q-Achsen-Stromkomponente ($i^*_{q,temp}$) für die neue d-Achsen-Stromkomponente ($i^*_{d,temp}$) und die kompensierte Drehmomentreferenz ($\tau^{**}$),

f"4) Erhalten eines neuen angepassten Spannungsreferenzvektors ($u^{**}_{dq,temp}$) auf der Grundlage der neuen Stromkomponente für die d-Achse ($i^*_{d,temp}$) und der neuen q-Achsen-Stromkomponente ($i^*_{q,temp}$) mittels des Modells (21),

f"5) Bestimmen eines aktualisierten neuen angepassten Spannungsreferenzvektors ($\hat{u}^{**}_{dq,temp}$) durch Summieren des neuen angepassten Spannungsreferenzvektors ($u^{**}_{dq,temp}$) und eines neuen Anpassungsteil-spannungsvektors ($\varepsilon_{dq\_i,k-1}$), der von dem Regler (19) auf der Grundlage einer Differenz zwischen einem Vektor, gebildet durch die neue d-Achsen-Stromkomponente ($i^*_{d,temp}$) und die neue q-Achsen-Stromkomponente ($i^*_{q,temp}$), und einem gemessenen Strom ($i_{dq}$) erhalten wird,

f"6) Vergleichen der Größe ($|\hat{u}^{**}_{dq,temp}|$) des angepassten neuen Spannungsreferenzvektors ($\hat{u}^{**}_{dq,temp}$) mit der Grenzspannung ($U_{lim}$),

Wiederholen der Schritte f"2) bis f"6) bis die Größe ($|\hat{u}^{**}_{dq,temp}|$) des aktualisierten neuen angepassten Spannungsreferenzvektors ($\hat{u}^{**}_{dq,temp}$) kleiner oder gleich der Grenzspannung ($U_{lim}$) ist, und wenn die Größe ($|\hat{u}^{**}_{dq,temp}|$) des aktualisierten neuen angepassten Spannungsreferenzvektors ($\hat{u}^{**}_{dq,temp}$) kleiner oder gleich der Grenzspannung ($U_{lim}$) ist,

Einstellen der neuen d-Achsen-Stromkomponente ($i^*_{d,temp}$) und der neuen q-Achsen-Stromkomponente

$(i_{q,temp}^{*})$ als der neue Stromreferenzvektor $(i_{dq}^{*})$ und des aktualisierten neuen angepassten Spannungs-

referenzvektors $(\hat{u}_{dq,temp}^{**})$ als der neue angepasste Spannungsreferenzvektor $(\hat{u}_{dq}^{*})$.

11. Computerprogramm zum Steuern einer Synchronmaschine (M) mittels einer elektrischen Ansteuerung (11), wobei das Computerprogramm Computercode umfasst, der beim Laufen auf einer Verarbeitungseinheit einer Steuerung (1) die Steuerung (1) zu Folgendem veranlasst:

a) Erhalten eines Stromreferenzvektors $(i_{dq}^{*})$ für eine Drehmomentreferenz $(\tau^{*})$ aus mindestens einer Strom-Nachschlagetabelle (LUT-$i_d$; LUT-$i_q$), wobei die mindestens eine Strom-Nachschlagetabelle (LUT-$i_d$; LUT-$i_q$) die Beziehungen zwischen Strömen und Drehmomenten für die Synchronmaschine (M) beschreibt, und Erhalten eines Flussverkettungsvektors $(\lambda_{dq})$ für den Stromreferenzvektor $(i_{dq}^{*})$ aus einer Flussverkettung-Nachschlagetabelle (LUT-$\lambda$), die Beziehungen zwischen Strömen und Flussverkettungen beschreibt,

b) Bestimmen eines Anpassungsteilspannungsvektors $(\varepsilon_{dq})$ mittels eines Reglers (19) auf der Grundlage einer Differenz zwischen dem Stromreferenzvektor $(i_{dq}^{*})$ und einem gemessenen Strom $(i_{dq})$, **gekennzeichnet durch**

c) Bestimmen eines Flussverkettung-Anpassungsvektors $(\Delta\lambda_{dq\_l})$ und eines Drehmomentreferenzfehlers $(\Delta\tau_l)$ auf der Grundlage des Anpassungsteilspannungsvektors $(\varepsilon_{dq})$, wobei der Drehmomentreferenzfehler $(\Delta\tau_l)$ ferner auf der Grundlage des gemessenen Stroms $(i_{dq})$ bestimmt wird,

d) Erzeugen einer kompensierten Drehmomentreferenz $(\tau^{**})$ durch Summieren der Drehmomentreferenz $(\tau^{*})$ und des Drehmomentreferenzfehlers $(\Delta\tau_l)$,

e) Erhalten eines neuen Stromreferenzvektors $(i_{dq}^{*})$ für die kompensierte Drehmomentreferenz $(\tau^{**})$ aus der mindestens einen Strom-Nachschlagetabelle (LUT-$i_d$; LUT-$i_q$) und Erhalten eines neuen Flussverkettungsvektors $(\lambda_{dq})$ für den neuen Stromreferenzvektor $(i_{dq}^{*})$ aus der Flussverkettung-Nachschlagetabelle (LUT-$\lambda$),

f) Bestimmen eines angepassten Spannungsreferenzvektors $(\hat{u}_{dq}^{*})$ auf der Grundlage des neuen Stromreferenzvektors $(i_{dq}^{*})$ und der Summe des neuen Flussverkettungsvektors $(\lambda_{dq})$ und des Flussverkettung-Anpassungsvektors $(\Delta\lambda_{dq\_l})$ mittels eines Modells (21), das die Dynamik der Synchronmaschine (M) beschreibt, und

g) Steuern der Synchronmaschine (M) mittels der elektrischen Ansteuerung (11) auf der Grundlage des angepassten Spannungsreferenzvektors $(\hat{u}_{dq}^{*})$.

12. Computerprogrammprodukt, das ein Computerprogramm nach Anspruch 11 und eine Anlageeinheit (7), auf welcher das Computerprogramm gespeichert ist, umfasst.

13. Steuerung (1), ausgelegt zum Steuern einer Synchronmaschine (M) mittels einer elektrischen Ansteuerung (11), wobei die Steuerung (1) Folgendes umfasst:

eine Verarbeitungseinheit (5), und
eine Ablageeinheit (7), die Computercode enthält, wobei der Computercode beim Laufen auf der Verarbeitungseinheit (5) die Steuerung (1) veranlasst zum:

a) Erhalten eines Stromreferenzvektors $(i_{dq}^{*})$ für eine Drehmomentreferenz $(\tau^{*})$ aus mindestens einer Strom-Nachschlagetabelle (LUT-$i_d$; LUT-$i_q$), wobei die mindestens eine Strom-Nachschlagetabelle (LUT-$i_d$; LUT-$i_q$) Beziehungen zwischen Strömen und Drehmomenten für die Synchronmaschine (M) beschreibt, und Erhalten eines Flussverkettungsvektors $(\lambda_{dq})$ für den Stromreferenzvektor $(i_{dq}^{*})$ aus einer Flussverkettung-Nachschlagetabelle (LUT-$\lambda$), die Beziehungen zwischen Strömen und Flussverkettungen beschreibt,

b) Bestimmen eines Anpassungsteilspannungsvektors $(\varepsilon_{dq})$ mittels eines Reglers (19) auf der Grundlage einer Differenz zwischen dem Stromreferenzvektor $(i_{dq}^{*})$ und einem gemessenen Strom $(i_{dq})$,

wobei die Steuerung **dadurch gekennzeichnet ist, dass** der Computercode beim Laufen auf der Verarbeitungseinheit (5) die Steuerung (1) veranlasst zum:

c) Bestimmen eines Flussverkettung-Anpassungsvektors ($\Delta\lambda_{dq\_l}$) und eines Drehmomentreferenzfehlers ($\Delta\tau_l$) auf der Grundlage des Anpassungsteilspannungsvektors ($\varepsilon_{dq}$), wobei der Drehmomentreferenzfehler ($\Delta\tau_l$) ferner auf der Grundlage des gemessenen Stroms ($i_{dq}$) bestimmt wird,

d) Erzeugen einer kompensierten Drehmomentreferenz ($\tau^{**}$) durch Summieren der Drehmomentreferenz ($\tau^*$) und des Drehmomentreferenzfehlers ($\Delta\tau_l$),

e) Erhalten eines neuen Stromreferenzvektors ($i_{dq}^*$) für die kompensierte Drehmomentreferenz ($\tau^{**}$) aus der mindestens einen Strom-Nachschlagetabelle (LUT-i$_d$; LUT-i$_q$) und Erhalten eines neuen Flussverkettungsvektors ($\lambda_{dq}$) für den neuen Stromreferenzvektor ($i_{dq}^*$) aus der Flussverkettung-Nachschlagetabelle (LUT-$\lambda$),

f) Bestimmen eines angepassten Spannungsreferenzvektors ($\hat{u}_{dq}^*$) auf der Grundlage des neuen Stromreferenzvektors ($i_{dq}^*$) und der Summe des neuen Flussverkettungsvektors ($\lambda_{dq}$) und des Flussverkettung-Anpassungsvektors ($\Delta\lambda_{dq\_l}$) mittels eines Modells (21), das die Dynamik der Synchronmaschine (M) beschreibt, und

g) Steuern der Synchronmaschine (M) mittels der elektrischen Ansteuerung (11) auf der Grundlage des angepassten Spannungsreferenzvektors.

14. Steuerung (1) nach Anspruch 13, wobei der Stromreferenzvektor und der neue Stromreferenzvektor Vektoren in einem dq-Koordinatensystem sind, das mit einer Rotordrehzahl der Synchronmaschine rotiert.

15. Steuerung (1) nach Anspruch 13 oder 14, wobei eine d-Achsen-Stromkomponente des Stromreferenzvektors und eine d-Achsen-Stromkomponente des neuen Stromreferenzvektors aus einer d-Achsen-Komponenten-Nachschlagetabelle erhalten werden und eine q-Achsen-Stromkomponente des Stromreferenzvektors und eine q-Achsen-Stromkomponente des neuen Stromreferenzvektors aus einer q-Achsen-Komponenten-Nachschlagetabelle erhalten werden, wobei die d-Achsen-Komponenten-Nachschlagetabelle mehrere d-Achsen-Stromkomponenten-Referenzwerte für jeden Drehmomentwert umfassen und die q-Achsen-Komponenten-Nachschlagetabelle mehrere q-Achsen-Stromkomponenten-Referenzwerte für jeden Drehmomentwert und jeden d-Achsen-Komponentenwert umfassen, wobei die Verarbeitungseinheit ausgelegt ist zum Auswählen eines Stromreferenzvektors mit minimaler Länge als der Stromreferenzvektor und der neue Stromreferenzvektor.

16. Synchronmaschinensteuerungssystem (10), das Folgendes umfasst:

eine Synchronmaschine (M),
eine elektrische Ansteuerung (11), eingerichtet zum Steuern der Synchronmaschine (M), und
eine Steuerung (1) nach einem der Ansprüche 13-15, ausgelegt zum Steuern der elektrischen Ansteuerung (11).

**Revendications**

1. Procédé de commande d'une machine synchrone (M) au moyen d'un entraînement électrique (11), le procédé comprenant :

a) l'obtention d'un vecteur de référence de courant ($i_{dq}^*$) pour une référence de couple ($\tau^*$), à partir d'au moins une table de consultation de courants (LUT-i$_d$, LUT-i$_q$), laquelle au moins une table de consultation de courants (LUT-i$_d$, LUT-i$_q$) décrivant des relations entre des courants et couples de la machine synchrone (M), et l'obtention d'un vecteur de liaison de flux ($\lambda_{dq}$) pour le vecteur de référence de courant ($i_{dq}^*$), à partir d'une table de consultation de liaisons de flux (LUT-$\lambda$) décrivant des relations entre des courants et des liaisons de flux,

b) la détermination d'un vecteur de tension de partie d'ajustement ($\varepsilon_{dq}$) au moyen d'un régulateur (19), en fonction d'une différence entre le vecteur de référence de courant ($i_{dq}^*$) et un courant mesuré ($i_{dq}$), **caractérisé par**

c) la détermination d'un vecteur d'ajustement de liaison de flux ($\Delta\lambda_{dq\_l}$) et d'une erreur de référence de couple ($\Delta\tau_l$) en fonction du vecteur de tension de partie d'ajustement ($\varepsilon_{dq}$), l'erreur de référence de couple ($\Delta\tau_l$) étant déterminée en outre en fonction du courant mesuré ($i_{dq}$,

d) la génération d'une référence de couple compensée ($\tau^{**}$) en additionnant la référence de couple ($\tau^*$) et l'erreur de référence de couple ($\Delta\tau_l$)),

e) l'obtention d'un nouveau vecteur de référence de courant ($i_{dq}^*$) pour la référence de couple compensée à partir de l'au moins une table de consultation de courants (LUT-i$_d$, LUT-i$_q$), et l'obtention d'un nouveau vecteur de liaison de flux ($\lambda_{dq}$) pour le nouveau vecteur de référence de courant ($i_{dq}^*$) à partir de la table de consultation de liaisons de flux (LUT-$\lambda$),

f) la détermination d'un vecteur de référence de tension ajusté ($\hat{u}_{dq}^*$) en fonction du nouveau vecteur de référence de courant ($i_{dq}^*$), et de la somme du nouveau vecteur de liaison de flux ($\lambda_{dq}$) et du vecteur d'ajustement de liaison de flux ($\Delta\lambda_{dq\_l}$) au moyen d'un modèle (21) décrivant la dynamique de la machine synchrone (M), et

g) la commande de la machine synchrone (M) au moyen de l'entraînement électrique (11) en fonction du vecteur de référence de tension ajusté ($\hat{u}_{dq}^*$).

2. Procédé selon la revendication 1, comprenant f') la détermination d'un nouveau vecteur de référence de tension ajusté ($\hat{u}_{dq}^*$) en additionnant le vecteur de référence de tension ajusté ($\hat{u}_{dq}^*$) et un nouveau vecteur de tension de partie d'ajustement ($\varepsilon_{dq}$) qui est obtenu à partir du régulateur (19) en fonction d'une différence entre le nouveau vecteur de référence de courant ($i_{dq}^*$) et un courant mesuré ($i_{dq}$), dans lequel à l'étape g) la commande est fonction du nouveau vecteur de référence de tension ajusté ($\hat{u}_{dq}^*$).

3. Procédé selon l'une quelconque des revendications précédentes, dans lequel le vecteur de référence de courant ($i_{dq}^*$) et le nouveau vecteur de référence de courant ($i_{dq}^*$) sont des vecteurs dans un système de coordonnées dq qui tourne avec une vitesse de rotor de la machine synchrone (M).

4. Procédé selon l'une quelconque des revendications précédentes, dans lequel une composante de courant selon l'axe d du vecteur de référence de courant ($i_{dq}^*$) et une composante de courant selon l'axe d du nouveau vecteur de référence de courant ($i_{dq}^*$) sont obtenues à partir d'une table de consultation de composantes selon l'axe d (LUT-i$_d$) et une composante de courant selon l'axe q du vecteur de référence de courant et une composante de courant selon l'axe q du nouveau vecteur de référence de courant sont obtenues à partir d'une table de consultation de composantes selon l'axe q (LUT-i$_q$), la table de consultation de composantes selon l'axe d comprenant une pluralité de valeurs de référence de composantes de courant selon l'axe d pour chaque valeur de couple, et la table de consultation de composantes selon l'axe q comprenant une pluralité de valeurs de référence de composantes de courant selon l'axe q pour chaque valeur de couple et chaque valeur de composante selon l'axe d, dans lequel à l'étape a) et à l'étape e) un vecteur de référence de courant ($i_{dq}^*$) d'une longueur minimale est sélectionné comme vecteur de référence de courant ($i_{dq}^*$) et nouveau vecteur de référence de courant ($i_{dq}^*$), respectivement.

5. Procédé selon la revendication 4, dans lequel à l'étape c) le vecteur d'ajustement de liaison de flux ($\Delta\lambda_{dq\_l}$) et l'erreur de référence de couple ($\Delta\tau_l$) sont déterminés en fonction d'une partie intégrale ($\varepsilon_{dql}$) du vecteur de tension de partie d'ajustement ($\varepsilon_{dq}$).

6. Procédé selon l'une quelconque des revendications précédentes, dans lequel le vecteur d'ajustement de liaison de flux ($\Delta\lambda_{dq\_l}$) et l'erreur de référence de couple ($\Delta\tau_l$) sont déterminés en fonction d'une vitesse mesurée ($\omega_m$) de la machine synchrone (M).

7. Procédé selon l'une quelconque des revendications 3 à 6, dans lequel à l'étape e) le nouveau vecteur de référence de courant est obtenu en obtenant tout d'abord à partir de la table de consultation de composantes selon l'axe d (LUT-$i_d$) une composante de courant selon l'axe d dans des conditions de couple maximum par ampère, MTPA, pour la référence de couple compensée ($\tau^{**}$) et en obtenant ensuite à partir de la table de consultation de composantes selon l'axe q (LUT-$i_q$) une composante de courant selon l'axe q pour la référence de couple compensée ($\tau^{**}$) et la composante de courant selon l'axe d.

**8.** Procédé selon la revendication 7, dans lequel l'étape f) comprend en outre la comparaison de la grandeur ($\left|\hat{u}_{dq,temp}^*\right|$) du vecteur de référence de tension ajusté à une tension limite ($U_{lim}$) de la machine synchrone (M) quand une vitesse mesurée ($\omega_m$) de la machine synchrone (M) est supérieure à une vitesse limite ($\omega_{m,lim}$) de la machine synchrone (M), dans le cas où la grandeur ($\left|\hat{u}_{dq,temp}^*\right|$) du vecteur de référence de tension ajusté ($u_{dq}^*, \hat{u}_{dq,temp}^*$) est inférieure à la tension limite ($U_{lim}$), f1) la composante de courant selon l'axe d et la composante de courant selon l'axe q sont réglées en tant que nouveau vecteur de référence de courant ($i_{dq}^*$).

**9.** Procédé selon la revendication 8, le procédé comprenant dans le cas où la grandeur ($\left(\left|\hat{u}_{dq,temp}^*\right|\right)$) du vecteur de référence de tension ajusté est supérieure à la tension limite ($U_{lim}$) et la vitesse mesurée ($\omega_m$) est supérieure à la vitesse limite ($\omega_{m,lim}$) :

f2) l'obtention d'une nouvelle composante de courant selon l'axe d ($i_{d,temp}^*$) en réduisant la composante de courant selon l'axe d vers une composante de courant selon l'axe d minimale ($i_{d,min}$)

f3) l'obtention à partir de la table de consultation de composantes selon l'axe q (LUT-$i_q$) d'une nouvelle composante de courant selon l'axe q ($i_{q,temp}^*$) pour la nouvelle composante de courant selon l'axe d ($i_{d,temp}^*$) et la référence de couple compensée ($\tau^{**}$),

f4) l'obtention d'un nouveau vecteur de référence de tension ajusté ($u_{dq,temp}^*$) en fonction de la nouvelle composante de courant selon l'axe d ($i_{d,temp}^*$), la nouvelle composante de courant selon l'axe q ($i_{q,temp}^*$) et de la somme du nouveau vecteur de liaison de flux et du vecteur d'ajustement de liaison de flux au moyen du modèle (21), f5) la comparaison de la grandeur ($\left|\hat{u}_{dq,temp}^*\right|$) du nouveau vecteur de référence de tension ajusté ($\hat{u}_{dq,temp}^*$) à la tension limite ($U_{lim}$),

la répétition des étapes f2) à f5) jusqu'à ce que la grandeur ($\left|\hat{u}_{dq,temp}^*\right|$) du vecteur de référence de tension ajusté ($\hat{u}_{dq,temp}^*$) soit égale ou inférieure à la tension limite ($U_{lim}$), et quand la grandeur ($\left|\hat{u}_{dq,temp}^*\right|$) du nouveau vecteur de référence de tension ajusté ($\hat{u}_{dq,temp}^*$) est égale ou inférieure à la tension limite ($U_{lim}$) ' le réglage de la nouvelle composante de courant selon l'axe d ($i_{d,temp}^*$)) et de la nouvelle composante de courant selon l'axe q ($i_{q,temp}^*$) comme nouveau vecteur de référence de courant ($i_{dq}^*$) et du nouveau vecteur de référence de tension ajusté ($\hat{u}_{dq,temp}^*$) comme vecteur de référence de tension ajusté ($u_{dq}^*$).

**10.** Procédé selon la revendication 8, le procédé comprenant, dans le cas où la grandeur ($\left|\hat{u}_{dq,temp}^{**}\right|$) du vecteur de référence de tension ajusté est supérieure à la tension limite ($U_{lim}$) et la vitesse mesurée ($\omega_m$) est supérieure à la vitesse limite ($\omega_{m,lim}$) :

f''2) l'obtention d'une nouvelle composante de courant selon l'axe d ($i_{d,temp}^*$) en réduisant la composante de courant selon l'axe d vers une composante de courant selon l'axe d ($i_{d,min}^*$) minimale,

f''3) l'obtention à partir de la table de consultation de composantes selon l'axe q (LUT-$i_q$) d'une nouvelle composante de courant selon l'axe q ($i_{q,temp}^*$) pour la nouvelle composante de courant selon l'axe d ($i_{d,temp}^*$) et la référence de couple compensée ($\tau^{**}$),

f''4) l'obtention d'un nouveau vecteur de référence de tension ajusté ($\hat{u}_{dq,temp}^{**}$) en fonction de la nouvelle composante de courant selon l'axe d ($i_{d,temp}^{*}$) et la nouvelle composante de courant selon l'axe q ($i_{q,temp}^{*}$), au moyen du modèle (21),

f''5) la détermination d'un nouveau vecteur de référence de tension ajusté ($\hat{u}_{dq,temp}^{**}$) mis à jour en additionnant le nouveau vecteur de référence de tension ajusté ($\hat{u}_{dq,temp}^{**}$) et un nouveau vecteur de tension de partie d'ajustement ($\varepsilon_{dq_i,k-1}$) qui est obtenu à partir du régulateur (19) en fonction d'une différence entre un vecteur formé par la nouvelle composante de courant selon l'axe d ($i_{d,temp}^{*}$) et la nouvelle composante de courant selon l'axe q ($i_{q,temp}^{*}$) et un courant mesuré ($i_{dq}$),

f''6) la comparaison de la grandeur ($\left|\hat{u}_{dq,temp}^{**}\right|$) du nouveau vecteur de référence de tension ajusté ($\hat{u}_{dq,temp}^{**}$) à la tension limite ($U_{lim}$),

la répétition des étapes f'2) to f'6) jusqu'à ce que la grandeur ($\left|\hat{u}_{dq,temp}^{**}\right|$) du nouveau vecteur de référence de tension ajusté ($\hat{u}_{dq,temp}^{**}$) mis à jour soit égale ou inférieure à la tension limite ($U_{lim}$), et quand la grandeur ($\left|\hat{u}_{dq,temp}^{**}\right|$) du nouveau vecteur de référence de tension ajusté ($\hat{u}_{dq,temp}^{**}$) mis à jour est égale ou inférieure à la tension limite ($U_{lim}$),

le réglage de la nouvelle composante de courant selon l'axe d ($i_{d,temp}^{*}$) et de la nouvelle composante de courant selon l'axe q ($i_{q,temp}^{*}$) comme nouveau vecteur de référence de courant ($i_{dq}^{*}$) et du nouveau vecteur de référence de tension ajusté ($\hat{u}_{dq,temp}^{**}$) mis à jour comme nouveau vecteur de référence de tension ajusté ($u_{dq}^{*}$).

11. Programme informatique pour commander une machine synchrone (M) au moyen d'un entraînement électrique (11), le programme informatique comprenant un code informatique qui, à son exécution sur une unité de traitement d'un contrôleur (1), amène le contrôleur (1) à :

a) obtenir un vecteur de référence de courant ($i_{dq}^{*}$) pour une référence de couple ($\tau^*$), à partir d'au moins une table de consultation de courants (LUT-i$_d$, LUT-i$_q$), laquelle au moins une table de consultation de courants (LUT-i$_d$, LUT-i$_q$) décrivant des relations entre des courants et couples de la machine synchrone (M), et obtenir d'un vecteur de liaison de flux ($\lambda_{dq}$) pour le vecteur de référence de courant ($i_{dq}^{*}$), à partir d'une table de consultation de liaisons de flux (LUT-$\lambda$) décrivant des relations entre des courants et des liaisons de flux,

b) déterminer un vecteur de tension de partie d'ajustement ($\varepsilon_{dq}$) au moyen d'un régulateur (19), en fonction d'une différence entre le vecteur de référence de courant ($i_{dq}^{*}$) et un courant mesuré ($i_{dq}$), **caractérisé par**

c) déterminer un vecteur d'ajustement de liaison de flux ($\Delta\lambda_{dq\_l}$) et une erreur de référence de couple ($\Delta\tau_l$) en fonction du vecteur de tension de partie d'ajustement ($\varepsilon_{dq}$), l'erreur de référence de couple ($\Delta\tau_l$) étant déterminée en outre en fonction du courant mesuré ($i_{dq}$),

d) générer une référence de couple compensée ($\tau^{**}$) en additionnant la référence de couple ($\tau^*$) et l'erreur de référence de couple ($\Delta\tau_l$),

e) obtenir un nouveau vecteur de référence de courant ($i_{dq}^{*}$) pour la référence de couple compensée ($\tau^{**}$) à partir de l'au moins une table de consultation de courants (LUT-i$_d$, LUT-i$_q$), et l'obtention d'un nouveau vecteur de liaison de flux ($\lambda_{dq}$) pour le nouveau vecteur de référence de courant ($i_{dq}^{*}$) à partir de la table de consultation de liaisons de flux (LUT-$\lambda$),

f) déterminer un vecteur de référence de tension ajusté ($\hat{u}_{dq}^{*}$) en fonction du nouveau vecteur de référence de courant ($i_{dq}^{*}$), et de la somme du nouveau vecteur de liaison de flux ($\lambda_{dq}$) et du vecteur d'ajustement de

liaison de flux ($\Delta\lambda_{dq\_l}$) au moyen d'un modèle (21) décrivant la dynamique de la machine synchrone (M), et

g) commander la machine synchrone (M) au moyen de l'entraînement électrique (11) en fonction du vecteur de référence de tension ajusté ($\hat{u}_{dq}^*$) .

**12.** Produit-programme informatique comprenant un programme informatique selon la revendication 11, et une unité de mémorisation (7) sur laquelle est mémorisé le programme informatique.

**13.** Contrôleur (1) configuré pour commander une machine synchrone (M) au moyen d'un entraînement électrique (11), le contrôleur (1) comprenant :

une unité de traitement (5), et
une unité de mémorisation (7) contenant un code informatique, le code informatique, à son exécution sur l'unité de traitement (5) amenant le contrôleur (1) à :

a) obtenir un vecteur de référence de courant ($i_{dq}^*$) pour une référence de couple ($\tau^*$), à partir d'au moins une table de consultation de courants (LUT-$i_d$, LUT-$i_q$), laquelle au moins une table de consultation de courants (LUT-$i_d$, LUT-$i_q$) décrivant des relations entre des courants et couples de la machine synchrone (M), et obtenir d'un vecteur de liaison de flux ($\lambda_{dq}$) pour le vecteur de référence de courant ($i_{dq}^*$), à partir d'une table de consultation de liaisons de flux (LUT-$\lambda$) décrivant des relations entre des courants et des liaisons de flux,
b) déterminer un vecteur de tension de partie d'ajustement ($\varepsilon_{dq}$) au moyen d'un régulateur (19), en fonction d'une différence entre le vecteur de référence de courant ($i_{dq}^*$) et un courant mesuré ($i_{dq}$), le contrôleur étant **caractérisé en ce que** le code informatique, à son exécution sur l'unité de traitement (5), amène le contrôleur (1) à
c) déterminer un vecteur d'ajustement de liaison de flux ($\Delta\lambda_{dq\_l}$) et une erreur de référence de couple ($\Delta\tau_l$) en fonction du vecteur de tension de partie d'ajustement ($\varepsilon_{dq}$), l'erreur de référence de couple ($\Delta\tau_l$) étant déterminée en outre en fonction du courant mesuré ($i_{dq}$),
d) générer une référence de couple compensée ($\tau^{**}$) en additionnant la référence de couple ($\tau^*$) et l'erreur de référence de couple ($\Delta\tau_l$),
e) obtenir un nouveau vecteur de référence de courant ($i_{dq}^*$) pour la référence de couple compensée ($\tau^{**}$) à partir de l'au moins une table de consultation de courants (LUT-$i_d$, LUT-$i_q$), et l'obtention d'un nouveau vecteur de liaison de flux ($\lambda_{dq}$) pour le nouveau vecteur de référence de courant ($i_{dq}^*$) à partir de la table de consultation de liaisons de flux (LUT-$\lambda$),
f) déterminer un vecteur de référence de tension ajusté ($\hat{u}_{dq}^*$) en fonction du nouveau vecteur de référence de courant ($i_{dq}^*$), et de la somme du nouveau vecteur de liaison de flux ($\lambda_{dq}$) et du vecteur d'ajustement de liaison de flux ($\Delta\lambda_{dq\_l}$) au moyen d'un modèle (21) décrivant la dynamique de la machine synchrone (M), et
g) commander la machine synchrone (M) au moyen de l'entraînement électrique (11) en fonction du vecteur de référence de tension ajusté.

**14.** Contrôleur (1) selon la revendication 13, dans lequel le vecteur de référence de courant et le nouveau vecteur de référence de courant sont des vecteurs dans un système de coordonnées dq qui tourne avec une vitesse de rotor de la machine synchrone.

**15.** Contrôleur (1) selon la revendication 13 or 14, dans lequel une composante de courant selon l'axe d du vecteur de référence de courant et une composante de courant selon l'axe d du nouveau vecteur de référence de courant sont obtenues à partir d'une table de consultation de composantes selon l'axe d et une composante de courant selon l'axe q du vecteur de référence de courant et une composante de courant selon l'axe q du nouveau vecteur de référence de courant sont obtenues à partir d'une table de consultation de composantes selon l'axe q, la table de consultation de composantes selon l'axe d comprenant une pluralité de valeurs de référence de composantes de courant selon l'axe d pour chaque valeur de couple, et la table de consultation de composantes selon l'axe q comprenant une pluralité de valeurs de référence de composantes de courant selon l'axe q pour chaque valeur de couple et chaque valeur de composante selon la revendication l'axe d, l'unité de traitement étant configurée pour sélectionner un vecteur de référence de courant d'une longueur minimale comme vecteur de référence de courant et nouveau vecteur de référence de courant.

16. Système de commande de machine synchrone (10) comprenant :

une machine synchrone (M),
un entraînement électrique (11) agencé pour commander la machine synchrone (M), et
un contrôleur (1) selon l'une quelconque des revendications 13-15, configuré pour commander l'entraînement électrique (11).

Fig. 1

Fig. 2

Fig. 3

Fig. 4

Fig. 5

Fig. 6

Fig. 7a

$\lim_{inf} = i_{d,min}$
$\lim_{sup} = i^*_{d,temp}$
counter = 0

$|\lim_{sup} - \lim_{inf}| > \delta i_d$
AND
counter < max$_{count}$

false

true

$f'_1$

$I^*_d = i^*_{d,temp}$
$I^*_q = i^*_{q,temp}$
iterations = counter
$\hat{u}^{**}_{dq} = \hat{u}^{**}_{dq,temp}$

$f''_2$   $i^*_{d,temp} = \dfrac{\lim_{sup} + \lim_{inf}}{2}$

$i^*_{d,temp}$

$\tau^* \longrightarrow$   LUT-iq
$(\tau, i_d) \rightarrow i_q$   $f'_3$

$i^*_{q,temp}$

$i^*_{d,temp} \longrightarrow$   Machine model   $f'_4$
$\omega_m \longrightarrow$

$\hat{u}^*_{dq,temp}$

$\epsilon_{dq\_i,k-1} \longrightarrow$   $\hat{u}^*_{dq,temp} + \epsilon_{dq,k-1}$   $f'_5$

$\hat{u}^{**}_{dq,temp}$

$\sqrt{u_d^2 + u_q^2}$

$|\hat{u}^{**}_{dq,temp}|$   $f'_6$

false   $|\hat{u}^{**}_{dq,temp}| > U_{lim}$   true

$\lim_{inf} = i^*_{d,temp}$     $\lim_{sup} = i^*_{d,temp}$

counter = counter + 1

Fig. 7b

Fig. 8a

Fig. 8b

Fig. 8c

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005035676 A1